# EUROPEAN PATENT SPECIFICATION

(11) **EP 2 586 910 B1**
(45) Date of publication and mention of the grant of the patent: **09.09.2015**
(21) Application number: 12192188.6
(22) Date of filing: 19.11.2004
(51) Int. Cl.: D06N 7/00, B32B 5/18, C08J 9/04

(54) **Carpet structure with plastomeric foam backing**
Teppichstruktur mit Unterlage aus plastomerischem Schaum
Structure de tapis avec support en mousse plastomère

(30) Priority: 20.11.2003 US 719389
(43) Date of publication of application: 01.05.2013
(62) Divisional of application: 04811734.5
(73) Proprietor: Shaw Industries Group, Inc., Dalton, GA 30721 (US)
(72) Inventor: Wright, Jeffrey, J., Cartersville, Georgia 30121 (US)
(74) Representative: Von Kreisler Selting Werner - Partnerschaft von Patentanwälten und Rechtsanwälten mbB

(56) References cited:
- US-A- 3 975 562
- US-A- 5 407 965
- US-A- 6 124 370
- US-A1- 2002 134 486
- DATABASE WPI Section Ch, Week 200421 Thomson Scientific, London, GB; Class A17, AN 2004-217979 XP002320669, & JP 2003 306568 A (MITSUBISHI KASEI VINYL KK) 31 October 2003 (2003-10-31)
- DATABASE WPI Section Ch, Week 200146 Thomson Scientific, London, GB; Class A17, AN 2001-428055 XP002320670, & JP 2001 139713 A (SEKISUI CHEM IND CO LTD) 22 May 2001 (2001-05-22)
- DATABASE WPI Section Ch, Week 199920 Thomson Scientific, London, GB; Class A17, AN 1999-232691 XP002320671, & JP 11 060781 A (SAKAI KAGAKU KOGYO KK) 5 March 1999 (1999-03-05)
- PATENT ABSTRACTS OF JAPAN vol. 1999, no. 5, 31 May 1999 (1999-05-31) & JP 11, 035747, A, (NISHI NIPPON NOBA FORM KK; NAGANO NOBAFUOOMU KK), 9 February 1999 (1999-02-09)
- DATABASE WPI Section Ch, Week 200003 Thomson Scientific, London, GB; Class A17, AN 2000-033610 XP002320672, & JP 11 302430 A (SEKISUI CHEM IND CO LTD) 2 November 1999 (1999-11-02)

## Description

### FIELD OF THE INVENTION

The present invention pertains to foam cushion backings. More particularly, the present invention pertains to foam cushion backings suitable for use in carpets and carpet tile products. The present invention further pertains to foam cushion-backed carpet and carpet tile products. The present invention further pertains to methods of making such foam cushion backings and carpet and carpet tiles as described herein.

### BACKGROUND OF THE INVENTION

Foam cushions are commonly used as backings for carpet or carpet tile products. When cushion-backed, carpets and carpet tiles may wear longer than products that do not have these backings. In particular, when stress is applied to carpet face yarn affixed to a carpet or carpet tile product having a cushioned backing, such as by walking, rolling or by placing heavy objects on the surface, the load is transferred from the carpet face to the cushioned backing. Thus, the cushioned backing will bear the majority of the load and the carpet face will generally not show wear as quickly as products not having a cushion backing. As such, a cushion backing system engineered to absorb that force can greatly increase the appearance retention of the carpet or carpet tile, thus increasing its usable life and lowering the overall cost to the consumer.

Additionally, since a cushion-backed carpet or carpet tile product can absorb the load applied by a person's walking or standing, the person's fatigue can be lessened. This makes cushion-backed carpet or carpet tile products especially beneficial in locations where persons walk or stand for extended periods such as, for example, offices, malls, airports etc.

However, when repeated stresses are placed on a carpet or carpet tile structure, such as by walking, standing, rolling or the placing of heavy objects on the surface, some foam backings can have a tendency to collapse. When this happens, a backing will no longer have significant cushioning properties. A person walking or standing on the carpet or carpet tile for extended periods may experience increased fatigue because of the loss of cushioning in the backing material. This, in turn, will normally lead to more wear to the face fibers because the stress applied will no longer be transferred to the backing. Delamination *i*.*e*., separation of one or more of the individual layers of the carpet or carpet tile product may also increase.

Polyurethanes are widely used in the preparation of foam cushion-backed carpet and carpet tiles. Application of a polyurethane cushion backing to a carpet or carpet tile generally enhances the longevity of the product and can decrease fatigue in a person walking or standing thereon. However, carpet and carpet tile products backed with polyurethane are generally not readily recyclable using low cost methods. That is, a polyurethane-backed carpet or carpet tile product generally must first be separated from the carpet face and primary backing prior to recycling so as to be able to obtain value from the components for later use to prepare products from such recycled materials. The potential uses for a heterogeneous mixture of recycled polymeric materials *i.e.,* unseparated materials, are generally quite limited in that desirable products are difficult to obtain from such materials. For example, while a recyclable carpet or carpet tile may be obtained from the use of a polyethylene face fiber, a polyethylene primary backing and an ethylene-containing adhesive material, when such carpet has a polyurethane foam cushion backing, the foam cushion backing is not readily compatible with the other materials. This generally results in an adverse affect on the mechanical properties (*e.g.,* tensile and impact strength) and aesthetic properties of any articles formed from such a mixture. While the various components can be separated from each other prior to use in a recycled product, the separation process generally takes considerable time and energy to undertake. Carpet or carpet tile having a foamed polyethylene backing bonded to the primary backing is known from US Patent 3,975,562. A pre-coated tufted carpet having an uncrosslinked foam cushion backing comprising a non-homogenously branched ethylene polymer or a substantially linear ethylene polymer is known from US 2002/0134486.

In light of the above, it would be beneficial to a obtain foam cushion backing for application to a carpet or carpet tile product, where such backing does not comprise polyurethane. It would be further desirable to have a carpet or carpet tile product having such a foam cushion backing, where such product exhibits durability and comfort underfoot.

### SUMMARY OF THE INVENTION

The present invention pertains to foam cushion backings. More particularly, the present invention pertains to foam cushion backings suitable for use in carpets and carpet tile products. The foam cushion backings herein are prepared from homogenously branched ethylene polymers or substantially linear ethylene polymers. The foam cushion backings may contain a resilient material. The present invention further pertains to foam cushion-backed carpet and carpet tile products. The carpets and carpet tiles can comprise a secondary backing material. The present invention further relates to methods of making such foam cushion backings and carpet and carpet tiles as described herein.

Additional advantages of the invention will be set forth in part in the detailed description.

### BRIEF DESCRIPTION OF THE DRAWINGS

Figure 1 shows an aspect of the present invention having a non-woven backing attached thereto.
Figure 2 shows an aspect of the present invention having a capcoat applied thereto.

### DETAILED DESCRIPTION OF THE INVENTION

The present invention may be understood more readily by reference to the following detailed description of the invention and the examples provided herein.

In this specification and in the claims that follow, reference will be made to a number of terms, which shall be defined to have the following meanings.

The singular forms "a," "an," and "the" include plural referents unless the context clearly dictates otherwise.

Ranges may be expressed herein as from "about" one particular value and/or to "about" or another particular value. When such a range is expressed, another aspect includes from the one particular value and/or to the other particular value. Similarly, when values are expressed as approximations, by use of the antecedent "about," it will be understood that the particular value forms another aspect.

"Optional" or "optionally" means that the subsequently described event or circumstance may or may not occur, and that the description includes instances where said event or circumstance occurs and instances where it does not. For example, the phrase "optionally comprising water" means that the composition may comprise water and that the description includes both compositions comprising water and compositions without water.

"Carpet" and "carpet tile" are used herein in the manner as would be recognized by one of ordinary skill in the art. The definition of carpet and carpet tiles herein does not include products that would be known to one of ordinary skill in the art as "resilient flooring." As an example, products that fall under the category of resilient flooring include, but are not limited to, linoleum, vinyl tiles, cork tiles, rubber tiles and floor mats.

In a first aspect, the invention pertains to a foam cushion backing comprising a foamable polymer composition comprising:
one or more of a homogenously branched ethylene polymer (HBEP) or a substantially linear ethylene polymer (SLEP), wherein a foam cushion backing is prepared from the foamable polymer composition, wherein the foam cushion backing comprises less than 2% crosslinking,
wherein the foam cushion backing has a thickness of greater than 0.19 cm (0.075 inches) and a density of from 0.16 to 0.48 g/cm³ (10 to 30 lbs/ft³), and wherein the foam cushion backing is suitable for use in carpet or carpet tiles.

The second aspect pertains to a preferred aspect of the first aspect above, wherein the foam cushion backing further comprises one or more resilient materials.

The third aspect of the present invention pertains to a carpet or carpet tile comprising a precoated greige good having a face side and a back side, wherein the precoated greige good has the foam cushion backing of the second aspect above.

The fourth aspect of the invention pertains to a method for making a foam cushion backing suitable for use in a carpet or carpet tile, wherein the method comprises:
(a) providing a polymer composition comprising:
   (i) one or more of a homogenously branched ethylene polymer ("HBEP") or a substantially linear ethylene polymer ("SLEP"); and
   (ii) a blowing agent;
(b) applying the polymer composition to a surface suitable to provide a foam cushion backing after activation of the blowing agent; and
(c) activating the blowing agent, thereby providing a foam cushion backing suitable for use in a carpet or carpet tile, wherein the foam cushion backing comprises less than 2% crosslinking, wherein the foam cushion backing has a thickness of greater than 0.19 cm (0.075 inches) and a density of from 0.16 to 0.48 g/cm³ (10 to 30 lbs/ft³).

The polymer composition used to prepare the foam cushion comprises a homogenously branched ethylene polymer. The term "homogeneously branched ethylene polymer" ("HBEP") means an ethylene interpolymer in which the comonomer is randomly distributed within a given polymer molecule and wherein substantially all of the polymer molecules have the same ethylene to comonomer molar ratio. The term more specifically refers to an ethylene interpolymer that is characterized by a relatively high short chain branching distribution index (SCBDI) or composition distribution branching index (CDBI). That is, the interpolymer has a SCBDI greater than or equal to 50 %, or greater than or equal to 70 %, or greater than or equal to 90 %, and generally lacks a measurable high density (crystalline) polymer fraction. SCBDI is defined as the weight % of the polymer molecules having a comonomer content within 50 % of the median total molar comonomer content and represents a comparison of the monomer distribution in the interpolymer to the monomer distribution expected for a Bernoullian distribution. The SCBDI of an interpolymer can be readily calculated from data obtained from techniques known in the art, such as, for example, temperature rising elution fractionation (abbreviated herein as "TREF") as described, for example, by Wild et al., Journal of Polymer Science, Poly. Phys. Ed., Vol. 20, p. 441 (1982), or in U.S. Patent. No. 4,798,081, or by L. D. Cady, "The Role of Comonomer Type and Distribution in LLDPE Product Performance," SPE Regional Technical Conference, Quaker Square Hilton, Akron, Ohio, October 1-2, pp.107-119 (1985). The monomer distribution of the interpolymer and SCBDI may also be determined using ¹³C NMR analysis in accordance with techniques described in U.S. Patent. No. 5,292,845 and by J. C. Randall in Rev. Macromol. Chem. Phys., C29, pp. 201-317.

In addition to referring to a homogeneous (or narrow) short branching distribution, the term "HBEP" also means the interpolymer does not have substantial long chain branching. That is, the ethylene interpolymer has an absence of long chain branching and a linear polymer backbone in the conventional sense of the term "linear." However, the term "HBEP" does not refer to high pressure branched polyethylene which is known to those skilled in the art to have numerous long chain branches. HBEP can be made using polymerization processes (*e.g.,* those described by Elston in U.S. Patent. No. 3,645,992) which provides a uniform (narrow) short branching distribution (*i.e.,* are homogeneously branched). In his polymerization process, Elston uses soluble vanadium catalyst systems to make such polymers, however others such as Mitsui Chemical Corporation, Exxon Chemical Corporation and Dow Chemical Company have used so-called single site catalyst systems to make polymers having a similar homogeneous structure. HBEPs suitable for use herein can be prepared in solution, slurry or gas phase processes using hafnium, zirconium and vanadium catalyst systems. Ewen et al. in U.S. Patent. No. 4,937,299 describes a method of preparation using metallocene catalysts.

Still further, the polymer composition comprises a substantially linear ethylene polymer ("SLEP"). "SLEPs" are a type of HBEP and are disclosed in U.S. Patent. Nos. 5,272,236 and 5,278,272. Such polymers are available are available from The Dow Chemical Company as AFFINITY™ polyolefin plastomers and from Dupont Dow Elastomers JV as ENGAGE™ polyolefin elastomers.

More particularly, as used herein, "SLEP" refers to homogeneously branched ethylene/α-olefin interpolymers that have a narrow short chain branching distribution and contain long chain branches as well as short chain branches attributable to homogeneous comonomer incorporation. The long chain branches are of the same structure as the backbone of the polymer and are longer than the short chain branches. The polymer backbone of substantially linear-olefin polymers is substituted with an average of 0.01 to 3 long chain branch/1000 carbons. SLEPs can have certain processing advantages for use in the present invention. When those advantages are desired, suitable SLEPs for use in the invention are substituted with from 0.01 long chain branch/1000 carbons to 1 long chain branch/1000 carbons, and more preferably from 0.05 long chain branch/1000 carbons to 1 long chain branches/1000 carbons.

Long chain branching is defined herein as a chain length of at least 6 carbons, above which the length cannot be distinguished using ¹³C nuclear magnetic resonance spectroscopy. Long chain branches are of greater length than the short chain branches resulting from comonomer incorporation.

The presence of long chain branching can be determined in ethylene homopolymers by using ¹³C nuclear magnetic resonance (NMR) spectroscopy and is quantified using the method described by Randall (Rev. Macromol. Chem. Phys., C29, V. 2&3, p. 285-297). As a practical matter, current ¹³C nuclear magnetic resonance spectroscopy cannot determine the length of a long chain branch in excess of six carbon atoms. However, there are other known techniques useful for determining the presence of long chain branches in ethylene polymers, including ethylene/1-octene interpolymers. Two such methods are gel permeation chromatography coupled with a low angle laser light scattering detector (GPC-LALLS) and gel permeation chromatography coupled with a differential viscometer detector (GPC-DV). The use of these techniques for long chain branch detection and the underlying theories have been well documented in the literature. *See*, for example, Zimm, G. H. and Stockmayer, W. H., J. Chem. Phys., 17, 1301 (1949) and Rudin, A., Modern Methods of Polymer Characterization, John Wiley & Sons, New York (1991) pp. 103-112.

Included among HBEPs suitable for use in the present invention are SLEPs due to their improved melt extrusion processability and unique rheological properties as described by Lai et al. in U.S. Patent. Nos. 5,272,236 and 5,278,272.

SLEPs differ from the class of polymers conventionally known as HBEPs, for example, by Elston in U.S. Patent. No. 3,645,992, in that substantially linear ethylene polymers do not have a linear polymer backbone in the conventional sense of the term "linear."

The SLEPs that may be used in the present invention may be characterized as having (a) a melt flow ratio, I₁₀ /I₂.5.63, (b) a molecular weight distribution, M_{w}/Mₙ, as determined by gel permeation chromatography and defined by the equation: (M_{w}/Mₙ) (I₁₀/I₂)-4.63, (c) a gas extrusion rheology such that the critical shear rate at onset of surface melt fracture for the substantially linear ethylene polymer is at least 50 % greater than the critical shear rate at the onset of surface melt fracture for a linear ethylene polymer, wherein the SLEP and the linear ethylene polymer comprise the same comonomer or comonomers, the linear ethylene polymer has an I₂, M_{w} /Mₙ and density within ten % of the SLEP and wherein the respective critical shear rates of the SLEP and the linear ethylene polymer are measured at the same melt temperature using a gas extrusion rheometer, (d) preferably a single differential scanning calorimetry, DSC, melting peak between -30 and 150 °C, and (e) a short chain branching distribution index greater than 50 %.

The SLEPs that may be used in this invention are homogeneously branched interpolymers and essentially lack a measurable "high density" fraction as measured by the TREF technique (*i.e.,* have a narrow short chain distribution and a high SCBD index). The SLEPs generally do not contain a polymer fraction with a degree of branching less than or equal to 2 methyls/1000 carbons. The "high density polymer fraction" can also be described as a polymer fraction with a degree of branching less than 2 methyls/1000 carbons.

The substantially linear ethylene interpolymers that may be used in the present invention are interpolymers of ethylene with at least one C₃-C₂₀ α-olefin and/or C₄ -C₁₈ diolefin. Copolymers of ethylene and α-olefin of C₃-C₂₀ carbon atoms can be used. The term "interpolymer" is used herein to indicate a copolymer, or a terpolymer, or the like, where, at least one other comonomer is polymerized with ethylene to make the interpolymer. Suitable unsaturated comonomers useful for polymerizing with ethylene include, for example, ethylenically unsaturated monomers, conjugated or non-conjugated dienes and polyenes. Examples of such comonomers include C₃-C₂₀ α-olefins as propylene, isobutylene, 1-butene, 1-hexene, 4-methyl-1-pentene, 1-heptene, 1-octene, 1-nonene, 1-decene and 1,9-decadiene. Other suitable monomers include styrene, halo- or alkyl-substituted styrenes, tetrafluoroethylene, vinylbenzocyclobutane, 1,4-hexadiene, 1,7-octadiene, and cycloalkenes, *e.g.,* cyclopentene, cyclohexene and cyclooctene.

SLEPs are known to have excellent processability, despite having a relatively narrow molecular weight distribution (for purposes of this invention, the M_{w}/Mₙ ratio is generally less than 3.0, or less than 2.5, and or less than 2). Surprisingly, unlike homogeneously and heterogeneously branched linear ethylene polymers, the melt flow ratio (I₁₀ /I₂) of substantially linear ethylene polymers can be varied essentially independently of the molecular weight distribution, M_{w} /Mₙ. Accordingly, a particularly suitable ethylene α-olefin polymer for use in the present invention can be a SLEP.

The term "heterogeneously branched linear ethylene polymer" is used herein in the conventional sense in reference to a linear ethylene interpolymer having a comparatively low short chain branching distribution index. That is, the interpolymer has a relatively broad short chain branching distribution. Heterogeneously branched linear ethylene polymers have a SCBDI less than 50 % and more typically less than 30 %. HBEPs and SLEPs also differ from the class of polymers known conventionally as heterogeneously branched traditional Ziegler polymerized linear ethylene interpolymers, for example, ultra low density polyethylene ("ULDPE"), very low density polyethylene ("VLDPE"), linear low density polyethylene ("LLDPE") medium density polyethylene ("MDPE") or high density polyethylene ("HDPE") made, for example, using the technique disclosed by Anderson et al. in U.S. Patent. No. 4,076,698, in that substantially linear ethylene interpolymers are homogeneously branched interpolymers. In one aspect, VLDPE, ULDPE, LLDPE, MDPE and HDPE are not used as the primary ethylene components in the foam cushion backings of the present invention (although such materials may be used as a component in any adhesive polymers or resilient materials utilized herein as discussed below). Further, in accordance with the present invention, the polymer composition does not comprise more than 20 % by weight of heterogeneously branched linear ethylene polymers, as measured by the total weight of the polymer composition. Still further, heterogeneously branched linear ethylene polymers do not comprise the primary ethylene component in the foam cushion backings of the present invention (although such materials may be used in small amounts as a component in any adhesive polymers and/or resilient materials utilized herein as discussed below).

HBEPs and SLEPs also differ significantly from the class known as free-radical initiated highly branched high pressure low density ethylene homopolymer and ethylene interpolymers such as, for example, ethylene-acrylic acid (EAA) copolymers and ethylene-vinyl acetate (EVA) copolymers, in that substantially linear ethylene polymers do not have equivalent degrees of long chain branching and are made using single site catalyst systems rather than free-radical peroxide catalyst systems. In accordance with the present invention, the polymer composition does not comprise more than 20 % by weight of free-radical initiated highly branched high pressure low density ethylene homopolymer and ethylene interpolymers, as measured by the total weight of the polymer composition, exclusive of any adhesive polymer and/or resilient material that contains such homopolymers and interpolymers (as discussed in more detail below).

Put another way, the polymer composition used in the foam cushion backings of the present invention can be characterized as having: a) a HBEP or SLEP component; b) optionally, a resilient material component; c) optionally, an adhesive polymer component; and d) optionally, a component comprising additional materials, such as filler.

In accordance with this description, component a) does not comprise more than 20 % by weight of free-radical initiated highly branched high pressure low density ethylene homopolymer and ethylene interpolymers or non-SLEP or non-HBEP polymer, as measured by the total weight of the polymer composition. In a further embodiment, the ethylene polymer of component a) of the polymer composition consists essentially of HBEP and/or SLEP, exclusive of any ethylene-containing adhesive polymer in the composition. Still further, component a) of the polymer composition of the present invention comprises at least 80 % by weight of HBEP as measured by weight of the composition. Still further, component a) of the polymer composition comprises HBEP in at least 80, 85, 90, 95, 97, 98, or 99 % by weight of the polymer composition, where any value can comprise an upper or a lower endpoint, as appropriate.

Still further, component a) of the polymer composition of the present invention comprises at least 80 % by weight of SLEP, exclusive of any ethylene-containing adhesive polymer in the composition. Still further, component a) of the polymer composition comprises SLEP in at least 80, 85, 90, 95, 97, 98, or 99 % by weight of the polymer in the polymer composition, where any value can comprise an upper or a lower endpoint, as appropriate.

Still further, component a) of portion of the polymer composition of the present invention can comprise a mixture of HBEP and SLEP and the amount of HBEP and SLEP in this mixture together comprise at least 80 % by weight of the polymer composition. Still further, the polymer composition comprises a mixture of HBEP and SLEP in at least 80, 85, 90, 95 or 97, 98, or 99 % by weight polymer composition, where any value can comprise an upper or a lower endpoint, as appropriate. In such a mixture, the amount of HBEP and SLEP can be individually varied in the amounts of, for example, from 1, 5, 10, 15, 20, 25, 30, 35, 40, 45, 50, 55, 60, 65, 70, 75, 80, 85, 90, 95, 97 or 98 % by weight, where any value can be used for the individual components, and any value can be used as an upper or a lower endpoint, as appropriate.

The density of the HBEP and/or SLEP can be from 0.880, 0.890, 0.895, 0.900, 0.905, 0.910, 0.915 or 0.920 g/cm³, where any value can comprise an upper or a lower endpoint, as appropriate.

In still a further embodiment, the polymer composition used to prepare the foam cushion backing can comprise a resilient material. "Resilient material" means a material that confers some rubber-like characteristics to the foam backing. In some aspects, it has been found that in accordance with the invention, the inclusion of this resilient material can improve the durability of the foam backing, which generally translates into an enhanced durability in a carpet or carpet tile product having such a foam cushion backing affixed thereto. That is, it has been found that the resilient material can enhance the durability of the foam backing by reducing the tendency of the foam backing to become "dead foam" and/or to become "compressed cells." "Dead foam" means foam that has a substantially reduced rebound after being compressed, such as by walking or other force applied to the surface of the carpet or carpet tile. "Compressed cells" are defined as foam that has lost its cellular structure and appears more like a hardback. As would be understood by one of ordinary skill in the art, when a foam backing collapses or compresses during use, the carpet or carpet tile product having such a backing will no longer function sufficiently as a cushion material. Rather, the backing material will more closely resemble a hardback material. Such a hardback structure will not provide adequate cushioning for most commercial uses and, as such, will be more likely to result in fatigue to a person walking on the carpet or carpet tile and will often result in a delamination of the carpet or carpet tile.

In a significant embodiment, the foam cushion backings of the present invention do not include grafted blends of polymers, such as those disclosed in U.S. Patent No. 6,395,791.

Still further, it has been found that, in some aspects, the cushioning of a carpet or carpet tile having the foam cushion backing of the present invention can be enhanced with inclusion of the resilient material. This has been shown, in some aspects, to translate into a carpet or carpet tile product that exhibits enhanced comfort underfoot and decreased fatigue to a person walking or standing on the product.

As such, in a further embodiment, the polymer composition used to prepare the foam cushion backings of the present invention comprises one or more of the following resilient materials: ethylene-propylene-diene monomer rubber (EPDM), ethylene-propylene monomer ("EPM"), acrylonitrile-butadiene (NBR), styrene-butadiene (SBR), carboxylated NBR and carboxylated SBR.

In a further embodiment, thermoplastic elastomers ("TPEs") may be utilized as the resilient material. TPEs are positioned between thermoplastics and elastomers in terms of structure and behavior. Like thermoplastics, TPEs become plastic due to the application of heat, and retain elastic behavior again on cooling. As would be understood by one of ordinary skill in the art, TPEs are elastomeric materials having physical cross-linking, which can be reversed via the further application of heat. Examples of TPEs that are suitable for use in the present invention are the various Kraton® polymers, available from Kraton Polymers (Houston, TX). One such Kraton polymer suitable for use herein is believed to be a styrene block copolymer. Additionally, polymers such as the Buna® EP (Bayer AG, Pittsburgh, PA) materials may be used as the resilient material. These materials are believed to comprise EPDM and EPM polymers. EPM represents a copolymer prepared from ethylene and propylene monomers, while EPDM denotes a terpolymer based on three monomers: ethylene, propylene and a non-conjugated diene. Another example of resilient materials that can be used is those supplied by Dow Chemical (Houston, TX) as "Flexomer®" resins. These materials are believed to be VLDPE resins that are flexible such that they can function as impact modifiers when blended with other polymers, such as those used in the polymer compositions herein.

When included in the polymer composition used to prepare the foam cushion backings of the present invention, the resilient material is added to the composition at from 5 to 40 % by weight of the polymer composition. Still further, the resilient material is added at from 15 to 25 % by weight of the polymer composition. Still further, the resilient material is added at from greater than 0, 0.1, 1.0, 3.0, 5.0, 10.0, 15.0, 20.0, 25.0, 30.0, 35.0 or 40.0 % by weight of the polymer composition, where any value can be used as an upper or lower endpoint, as appropriate. The resilient material may be present with another material, such as an ethylene polymer, to assist in dispersion of the resilient material in the polymer composition.

It should be noted that the foam cushion backings of the present invention need not comprise the resilient material in order to perform suitably for use in carpet and carpet tile products. However, in some circumstances, it has been found beneficial to add the resilient material where enhanced durability and/or comfort underfoot is desired in a product. As would be recognized by one of ordinary skill in the art, customers of carpet and carpet tile products will request varying specifications for these products. Thus, whether it is desirable to have enhanced durability and/or enhanced comfort underfoot will be dictated by the customers of the carpet and carpet tile products of the present invention. Whether or not to include the resilient material in the polymer compositions of the present invention will thus vary according to the specifications of the customer. As one example, when the carpet tile is intended for use in high traffic areas, such as airports or malls, it may be beneficial to add the resilient material to the polymer composition to enhance the durability of the foam cushion backing and, thus, the carpet or carpet tile itself. The varying of the amount of the resilient material or whether it is to be included at all will not require undue experimentation by one of ordinary skill in the art.

The polymer composition used to prepare the foam cushion backings of the present invention comprises an adhesive material. In this aspect, the polymer composition of the present invention further comprises at least one functionalized polyethylene. The term "functionalized polyethylene" herein means a polyethylene incorporating at least one functional group in its polymer structure. Exemplary functional groups may include, for example, ethylenically unsaturated mono- and di-functional carboxylic acids, ethylenically unsaturated mono- and di-functional carboxylic acid anhydrides, salts thereof and esters thereof. Such functional groups may be grafted to an ethylene homopolymer or an ethylene/α-olefin interpolymer, or it may be copolymerized with ethylene and an optional additional comonomer to form an interpolymer of ethylene, the functional comonomer and optionally other comonomer(s).

Generally, examples of such functionalized polyethylene may include: copolymers of ethylene and ethylenically unsaturated carboxylic acid such as acrylic acid and methacrylic acid; copolymers of ethylene and esters of carboxylic acid such as vinyl acetate; polyethylene grafted with an unsaturated carboxylic acid or a carboxylic acid anhydride, such as maleic anhydride. Specific examples of such functionalized polyethylene may include, ethylene/vinyl acetate copolymer (EVA), ethylene/acrylic acid copolymer (EAA), ethylene/methacrylic acid copolymer (EMAA), salts therefrom (ionomer), various polyethylene grafted with maleic anhydride (MAH) such as MAH-grafted high pressure low density polyethylene, heterogeneously branched linear ethylene/α-olefin interpolymers (which have commonly been referred to as "LLDPE" and "ULDPE"), homogeneously branched linear ethylene/α-olefin interpolymers, substantially linear ethylene/α-olefin interpolymers and HDPE. Means for grafting functional groups onto polyethylene are described for example in U.S. Patent. Nos. 4,762,890, 4,927,888, or 4,950,541. Two useful functionalized polyethylenes suitable for use in forming the compositions of present invention are ethylene/acrylic acid copolymers and maleic anhydride grafted polyethylene. More specific examples are functionalized polyethylenes that may be used herein are ethylene/acrylic acid copolymers, maleic anhydride-grafted substantially linear ethylene/α-olefin interpolymers and maleic anhydride-grafted high density polyethylene.

The amount of the functional group present in the functional polyethylene can vary. Typically, the functional group will be present in a graft-type functionalized polyethylene (*e.g.,* the maleic anhydride content in a maleic anhydride-grafted polyethylene) at a level which is at least 0.1 weight %, or at least 0.5 weight %. Still further, the functional group will typically be present in a graft-type functionalized polyethylene in an amount less than 10 weight %, or less than 5 weight %, or less than 3 weight %. In contrast, the functional group will typically be present in a copolymer-type functionalized polyethylene (*e.g.,* the acrylic acid content in an ethylene acrylic acid copolymer) from at least 1.0 weight %, or from at least 5 weight %, or from at least 7 weight %, as measured by weight of the polyethylene material to which the graft is made. The functional group will typically be present in a copolymer-type functionalized polyethylene in an amount less than 40 weight %, or less than 30 weight %, or less than 25 weight %.

The functionalized polyethylene can be present in the polymer composition at from greater than 0 to 20 % by weight of the polymer composition. Still further, the amount of functionalized polyethylene can be from 1, 3, 5, 7, 10, 13, 15, 17 or 20 % by weight of the polymer composition, where any value can be used as an upper or lower endpoint, as appropriate. Further, as would be understood by one of ordinary skill in the art, the amount of functionalized polyethylene added to the polymer compositions of the present invention can vary according to the amount of grafting.

The melt index (I₂) of the functionalized polyethylene may be varied, except to the extent to which it unacceptably affects processability of the inventive composition and physical properties of final product. Generally, the functionalized polyethylene has a melt index of at least 0.1 g/10 min., or from 0.2 g/10 min. Generally, the functionalized polyethylene has a melt index of less than 500 g/10 min, or less than 350 g/10 min.

In a further aspect, the polymer compositions used to prepare the foam cushion backings of the present invention comprise filler.. As would be recognized by one of ordinary skill in the art, the type of filler used will be selected on the basis of the desired physical properties of the final product. Exemplary fillers include calcium carbonate, barium sulfate, barite, glass fiber and powder, metal powder, alumina, hydrated alumina, clay, magnesium carbonate, calcium sulfate, silica or glass, fumed silica, talc, carbon black or graphite, fly ash, cement dust, feldspar, nepheline, magnesium oxide, zinc oxide, aluminum silicate, calcium silicate, titanium dioxide, titanates, glass microspheres, chalk, and mixtures thereof. Further fillers that may be used include calcium carbonate, barium sulfate, talc, silica/glass, alumina, and titanium dioxide, and mixtures thereof. A particularly suitable filler is calcium carbonate, which is available in the industry as limestone and rockdust.

Likewise, the filler may belong to the class of fillers known as "ignition resistance fillers." Exemplary ignition resistant fillers include antimony oxide, decabromobiphenyl oxide, alumina trihydrate, magnesium hydroxide, borates, and halogenated compounds. Other miscellaneous fillers that may be used include wood fibers/flours/chips, ground rice hulls, cotton, starch, glass fibers, synthetic fibers (*e.g.,* polyolefin fibers) and carbon fibers.

The amount of filler present in the polymer compositions used to prepare the foam backings of the present invention is selected based upon the requirements of the final application. For example, where the polymer composition is applied to a carpet greige good prior to activation of the blowing agent, it may be desirable to limit the amount of filler so as to enhance adhesion of the foam to the greige good. The polymer compositions can have a filler amount of at least 5 % by weight of the polymer composition. Still further, filler may be present in the polymer composition in at least 20 % by weight. Still further, the amount of filler in the polymer compositions of the present invention may be from 5, 10, 15, 20, 25, 30, 35, 40, 45, 50, 55, 60, 75 or 80 % by weight of the polymer composition where any value may be used as an upper or a lower endpoint, as appropriate.

In certain aspects, it can be beneficial to use filler that can be characterized as "recycled content." One such example, fly ash, is a residue of coal processing for power generators.

The polymer compositions of the present invention can comprise other materials such as processing aids, oils, pigments, antimicrobials, tackifiers, chemical flame retardants etc. Whether such materials are to be included will depend substantially on the intended use of the foam cushion backing. When such materials are included, they will be included in the amounts generally used in the art.

In a further aspect, the foam cushion backing has a thickness of greater than 0.19 cm (0.075 inches). Yet still further, the foam cushion has a thickness of not less than 0.19 cm (0.075 inches). Still further, the foam layer has a thickness of from 0.20, 0.23, 0.25, 0.28, 0.30, 0.36, 0.41, 0.46, 0.51, 0.56, 0.61, 0.66, 0.71 and 0.76 cm (0.080, 0.090, 0.100, 0.110, 0.120, 0.140, 0.160, 0.180, 0.200, 0.220, 0.240, 0.260, 0.280 or 0.300 inches), where any value can be used as an upper or a lower endpoint as appropriate. In accordance with these measurements, thickness is measured exclusive of the face, primary backing and precoat, that is, the thickness of the greige good is not measured as part of the thickness as specified herein.

In a further aspect, the foam cushion backings have a density of from 0.16 to 0.48 g/cm³ (10 to 30 lbs/ft³). Still further, the foam cushion backings of the present invention can have a density of from 0.11, 0.16, 0.21, 0.24, 0.27, 0.32, 0.37, 0.40, 0.43, 0.48 or 0.53 g/cm³ (7, 10, 13, 15, 17, 20, 23, 25, 27, 30 or 33 lbs/ft³) where any value can be used as an upper or lower endpoint, as appropriate.

As would be recognized by one of ordinary skill in the art, density is a measure of the amount of material per unit weight in the foam cushion backings. For example, foam density can be varied by changing the filler load and by the % gas (*e.g.,* amount of blowing agent) in the polymer composition. Up to a point, depending on the circumstances, more density generally means that there is more cushioning material available to do the work of protecting the carpet and providing comfort underfoot. It follows that density will be a factor in the expected performance of carpet cushion, with higher density generally relating to better performance that may be desirable under some circumstances.

It is also to be recognized that the density and thickness of the foam can be varied to affect properties in the final product. Still further, it will be recognized that it may be beneficial in some instances to reduce the weight of the final carpet or carpet tile product. For example, the thickness of the product can be minimized by reducing weight per square yard of the foam or by increasing the density of the foam. In a busy office corridor that receives high traffic, the carpet and cushion will be subjected to significant demands, justifying a higher performance, high-density cushion for long-term retention of properties. In contrast, an executive conference room that receives little traffic, requires a luxurious feel underfoot, and has a need for castered chairs to be reasonably movable. In this case, a lower density may be sufficient.

In a further aspect, carpet and carpet tiles having the foam cushion backing of the present invention affixed thereto exhibit excellent compression set values. As would be understood by one of ordinary skill in the art, compression set relates to the performance of a cushion in situations in which heavy objects will be periodically moved (*e*.*g*. repositioning of furniture such as a desk). Products with high compression set will generally leave noticeable, long-term indentations in the carpet or carpet tile products. In particular aspects of the present invention, the compression set of the backings herein can be from 1 to 20 %, where the % refers to the % recovery of the backing after a 7.6 x 7.6 cm (3" x 3") sample is compressed at 25 % for 22 h, where the temperature is at ambient (24°C (75 °F)). Still further, the compression set of the backings is from 1, 3, 5, 7, 10, 13, 15 or 20 %, where compression set is measured in accordance with the parameters herein, and where any value can form an upper or a lower endpoint as appropriate.

Still further, the cushioned backings of the present invention have a compression resistance. As would be recognized by one of skill in the art, a compression resistance relates to how a cushion will feel underfoot, as well as the ability of the cushion to provide support without "bottoming out." The ability of a cushion to support traffic without bottoming out can be important in achieving long term carpet appearance retention. In one aspect, the cushion backings of the present invention have a compression resistance of from 0.34 to 1.72 bar (5 to 25 psi) where 7.6 x 7.6 cm (3" x 3") sample of backing is compressed across the thickness for 1 minute and the force to recover the thickness is measured in psi, where the temperature is at ambient (24°C (75 °F)). Still further, the compression resistance of the backings herein is from 0.34, 0.48, 0.69, 0.90, 1.03, 1.17, or 1.38 bar (5, 7, 10, 13, 15, 17 or 20 psi), where compression resistance is measured in accordance with the parameters herein, and where any value can form an upper or a lower endpoint as appropriate, where the temperature is at ambient (24°C (75 °F)).

As would be recognized by one of ordinary skill in the art, the various properties of cushion backings for carpets and carpet tiles may be measured in various ways depending on the chemical composition of the backing system. For example, there are different ASTM methodologies depending on whether the backing is polyurethane, rubber, olefin polymers or blends of olefin polymers.

ASTM test 3575 can be used to measure the properties of the foam cushion backings herein. When Suffix B of this test is used to measure compression set of the foams herein, the compression set is from 8 to 20 % or from 8, 10, 12, 14, 16, 18 or 20 %, where any value can be used as the upper or lower endpoint, as appropriate. When Suffix D of this test is used to measure compression resistance, the compression resistance of the foam of this invention is from 1.24 to 2.21 bar (18 to 32 psi). Still further, the compression resistance is from 1.24, 1.38, 1.51, 1.65, 1.79, 1.93, 2.07 or 2.21 bar (18, 20, 22, 24, 26, 28, 30 or 32 psi) when measured in accordance with ASTM 3575 Suffix D, where any value can form and upper or a lower endpoint, as appropriate.

The polymeric components of the polymer composition can be supplied as pellets. Such pellets are normally mixed together in the presence of the other ingredients (*e.g.* filler, blowing agent and processing aids) prior to melting of the polymer composition. Alternatively, the polymer composition can be mixed in any manner that would be deemed acceptable by one of ordinary skill in the art. Such methods may include blending, mixing and extrusion.

As would be recognized, greige goods generally comprise a carpet fiber tufted into a primary backing. A "precoated greige good" is a greige good to which an adhesive material ("precoat") has been applied to the back surface so as to secure the carpet fibers to the primary backing material.

The face fiber or yarn used in forming the pile of the greige goods used herein is typically made of any one of a number of types of fiber, *e*.*g*., nylon, acrylics, polypropylene, polyethylene, polyamides, polyesters, wool, cotton and rayon.

Primary backings for the greige goods herein may be woven or non-woven fabrics made of one or more natural or synthetic fibers or yarns, such as jute, wool, polypropylene, polyethylene, polyamides, polyesters and rayon. Films of synthetic materials, such as polypropylene, polyethylene and ethylene-propylene copolymers may also be used to form the primary backing. The foam cushion backing can be applied to the back side of the greige good, in particular, a precoated greige good, by lamination of the finished foam cushion backing to the greige good with a separate adhesive. Such lamination techniques are conventional and well known to one of ordinary skill in the art. Alternatively, in preparing the foam cushion backings of the present invention, the polymer composition may be applied in a molten state to the back of a carpet or carpet tile structure *e.g.,* a precoated greige good, and the foam activated as discussed in more detail below.

Stabilizing materials, such as a fiberglass or FLW or nonwoven materials (each of which are known as "scrims" to one of ordinary skill in the art) can be present in the foam cushion backing. The incorporation of such scrims is also well known to one of ordinary skill in the art. For example, the scrim may be incorporated using an *"in situ*" process. Using such a process, the scrim can be situated on the foam while it is still in molten form. Nip pressure can be applied to the fiberglass/molten polymer combination to provide good contact between the fiberglass and polymer. Such contact can be enhanced when the blowing agent in the foam is activated. That is, when activated, the foamed polymer composition can penetrate the interstices of the fiberglass to provide suitable attachment of the fiberglass to the foam.

The greige good can be laminated to the scrim-foam cushion structure at the scrim side by the use of a suitable adhesive. Still further, the scrim may be incorporated adjacent to the underside of the greige good by setting it in an adhesive (*i.e.,* precoat or secondary adhesive) on the back of thereof. Such a process is disclosed in, for example, U.S. Patent No. 4,522,857. The foam cushion backing can then be affixed to the greige good by way of lamination with a suitable adhesive material. Still further, the scrim can be applied as disclosed in U.S. Patent No. 4,798,644.

In addition to polymeric secondary backings as described in U.S. Patent Application Serial No. 10/077,609 other secondary backings can be used for tufted pile carpets or carpet tiles. Such secondary backings may be woven or non-woven fabrics made of one or more natural or synthetic fibers or yarns. Such secondary backings can be leno weave, *i.e.,* tape yarn in the warp direction and spun staple fiber in the fill direction. When such cloth-type secondary backings are used, they will be applied on an outer surface of the foam backing. The attachment can be in accordance with the *in situ* process discussed previously. Alternatively, the secondary backing can be attached with an adhesive in accordance with methods known to one of ordinary skill in the art. Such secondary backings can be polyester ("PET") or mixtures of PET with other polymeric materials. As would be recognized by one of ordinary skill in the art, secondary backings can be useful to improve the dimensional stability of carpet and carpet tile products. Additionally, in some aspects, a cap coat can be applied to the outer surface of the foam cushion backing. The cap coat can be applied prior to activation of the blowing agent or after activation of the blowing agent as discussed further herein.

The cap coat layer can be an extruded layer of, for example, a HBEP, SLEP, LDPE, VLDPE, MDPE or HDPE in which an adhesive material has been included. As discussed elsewhere, the adhesive material can be a functionalized polyethylene material. Still further, the cap coat may comprise the polymeric secondary backing materials as disclosed in U.S. Patent Application Number 10/077,609. The cap coat can be applied at from 170 to 848 g/m² (5 to 25 oz/yd²). Still further, the cap coat can be applied at from 170, 339, 509, 678, 848 g/m² (5, 10, 15, 20, 25 oz/yd²), where any value can form an upper or a lower endpoint, as appropriate.

The foam cushion backings of the present invention are suitable for use in 1.83 or 3.66 m (6 or 12 foot) roll good carpets. If a carpet tile is desired, conventional methods of cutting roll goods into carpet tiles may be used. Methods for cutting carpet tiles from roll goods are well known to one of ordinary skill in the art and, as such, are not discussed in detail herein.

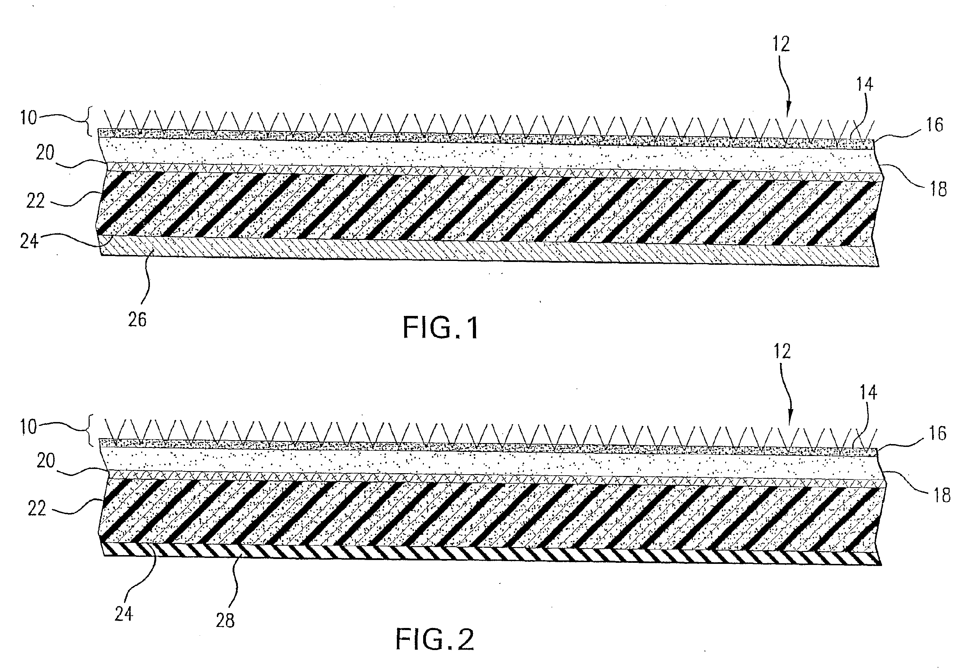

Referring now to Figure 1, a precoated greige good 10 is shown. The greige good has tufted yarn 12, primary backing 14 and adhesive precoat 16. An adhesive 18 attaches a foam cushion backing 22 to the precoated greige good 10. In this drawing, a fiberglass scrim 20 is attached to the foam cushion backing 22 prior to bringing the precoated greige good 10 together with the foam cushion backing 22. A non-woven textile backing 26 is attached at the lower surface 24 of the foam cushion backing 22. In Figure 2, a capcoat 28 is attached at the lower surface 24 of the foam cushion backing 22.

The foam cushion backings of the present invention can be made by an extrusion foaming process. The backings may be prepared by heating the polymer composition with any additives thereto to form a plasticized or melt polymer material, incorporating therein a blowing agent to form a foamable composition and extruding the composition through a die to form the foam product. The foamable composition may be extruded directly onto the back of a greige good. Alternatively, the foamable composition may be applied to a suitable surface so as to form a separate foam cushion backing material which can then be laminated to the back of a greige good or, alternatively, a polymeric secondary backing attached to a greige good, using a suitable adhesive as discussed elsewhere herein. When extruded directly onto the back of a greige good or a secondary backing affixed to a greige good, the polymer composition may comprise one or more adhesive materials as discussed above.

Blowing agents useful in making the foam backings of the present invention include inorganic agents, organic blowing agents and chemical blowing agents. Suitable inorganic blowing agents include carbon dioxide, nitrogen, argon, water, air, sulfur hexafluoride (SF₆) and helium. Organic blowing agents include aliphatic hydrocarbons having 1-9 carbon atoms, aliphatic alcohols having 1-3 carbon atoms, and fully and partially halogenated aliphatic hydrocarbons having 1-4 carbon atoms. Aliphatic hydrocarbons include methane, ethane, propane, n-butane, isobutane, n-pentane, isopentane and neopentane. Aliphatic alcohols include methanol, ethanol, n-propanol, and isopropanol. Fully and partially halogenated aliphatic hydrocarbons include fluorocarbons, chlorocarbons, and chlorofluorocarbons. Examples of fluorocarbons include methyl fluoride, perfluoromethane, ethyl fluoride, 1,1-difluoroethane (HFC-152a), fluoroethane (HFC-161), 1,1,1-trifluoroethane (HFC-143a), 1,1,1,2-tetrafluoroethane (HFC-134a), 1,1,2,2-tetrafluoroethane (HFC-134), 1,1,1,3,3-pentafluoropropane, pentafluoroethane (HFC-125), difluoromethane (HFC-32), perfluoroethane, 2,2-difluoropropane, 1,1,1-trifluoropropane, perfluoropropane, dichloropropane, difluoropropane, perfluorobutane, perfluorocyclobutane. Partially halogenated chlorocarbons and chlorofluorocarbons for use in this invention include methyl chloride, methylene chloride, ethyl chloride, 1,1,1-trichloroethane, 1,1-dichloro-1 fluoroethane (HCFC-141b), 1-chloro-1,1-difluoroethane (HCFC-142b), chlorodifluoromethane (HCFC-22), 1,1-dichloro-2,2,2-trifluoroethane (HCFC-123) and 1-chloro-1,2,2,2-tetrafluoroethane (HCFC-124). Fully halogenated chlorofluorocarbons include trichloromonofluoromethane (CFC-11), dichlorodifluoromethane (CFC-12), trichlorotrifluoroethane (CFC-113), dichlorotetrafluoroethane (CFC-114), chloroheptafluoropropane, and dichlorohexafluoropropane. Chemical blowing agents include azodicarbonamide, azodiisobutyro-nitrile, barium azodicarboxylate, N,N'-dimethyl-N,N'-dinitrosoterephthalamide, and benzenesulfonhydrazide, 4,4-oxybenzene sulfonyl semicarbazide, and p-toluene sulfonyl semicarbazide, trihydrazino triazine and mixtures of citric acid and sodium bicarbonate such as the various products sold under the name Hydrocerol™ (a product of Boehringer Ingelheim). Any of the foregoing blowing agents may be used singly or in combination with one or more other blowing agents. Preferred blowing agents include isobutane, carbon dioxide, HFC-152a, and mixtures of the foregoing.

The amount of blowing agent incorporated into the polymer composition is from 0.05 to 5.0 % by weight of the composition, or from 0.2 to 3.0 % by weight of the polymer composition. Still further, the amount of blowing agent can be from 0.2, 0.5, 0.7, 1.0, 1.2, 1.5 1.7, 2.0, 2.2, 2.5, 2.7 or 3.0 % by weight of the polymer composition, where any value can form an upper or a lower endpoint as appropriate. Yet still further, 0.5, 1, 2, 3 or 4 parts blowing agent can be added to 100 parts of the polymer composition.

Prior to mixing with the blowing agent, the foamable polymer composition can be heated to a temperature at or above its glass transition temperature or melting point. The blowing agent can then be incorporated or mixed into the melted polymer composition by any means known in the art such as with an extruder, mixer or blender. The blowing agent can be mixed with the melted polymer composition at an elevated pressure sufficient to prevent substantial expansion of the melted polymer composition and to advantageously disperse the blowing agent homogeneously therein. Optionally, a nucleator can be blended in the melted polymer composition or dry blended with the polymer composition prior to plasticizing or melting. Prior to extruding the foamable composition, the composition may be cooled to an optimum temperature. The composition may be cooled to a lower temperature than the melt temperature to optimize physical characteristics of the foam backing. This temperature, often referred to as the "foaming temperature," is typically above each component's polymer glass transition temperature (T_{g}), or for those having sufficient crystallinity, near the peak crystalline melting temperature (Tₘ). "Near" means at, above, or below and largely depends upon where stable foam exists. The temperature desirably falls within 30 °C above or below the Tₘ. For foams of the present invention, an optimum foaming temperature is in a range in which the foam does not collapse. The polymer composition may be cooled in the extruder or other mixing device or in separate coolers. The composition can then be extruded or conveyed through a die of desired shape to a zone of reduced or lower pressure to form the foam backing.

In an alternative aspect, the blowing agent may be dry blended with the polymer composition, *i.e.,* the unmelted polymer composition.

In another aspect, the resulting foam backing is optionally formed in a coalesced strand form by extrusion of the polymer material through a multi-orifice die. The orifices can be arranged so that contact between adjacent streams of the molten extrudate occurs during the foaming process and the contacting surfaces adhere to one another with sufficient adhesion to result in a unitary foam backing. The streams of molten extrudate exiting the die can take the form of strands or profiles, which desirably foam, coalesce, and adhere to one another to form a unitary structure. The coalesced individual strands or profiles should remain adhered in a unitary structure to prevent strand delamination under stresses encountered in preparing, shaping and using the foam. Apparatuses and methods for producing foam backings in coalesced strand form are described in U.S. Patent. Nos. 3,573,152 and 4,824,720.

Alternatively, the resulting foam backing can be conveniently formed by an accumulating extrusion process and apparatus as seen in U.S. Patent. No. 4,323,528 and U.S. Patent. No. 5,817,705. This apparatus, commonly known as an "extruder-accumulator system" allows one to operate a process on an intermittent, rather than a continuous, basis. The apparatus includes a holding zone or accumulator where foamable gel remains under conditions that preclude foaming. The holding zone is equipped with an outlet die that opens into a zone of lower pressure, such as the atmosphere. The die has an orifice that may be open or closed, preferably by way of a gate that is external to the holding zone. Operation of the gate does not affect the foamable composition other than to allow it to flow through the die. Opening the gate and substantially concurrently applying mechanical pressure on the gel by a mechanism (*e.g.,* a mechanical ram) forces the foamable composition through the die into a zone of lower pressure. The mechanical pressure is sufficient to force the foamable composition through the die at a rate fast enough to preclude significant foaming within the die yet slow enough to minimize and preferably eliminate generation of irregularities in foam cross-sectional area or shape. As such, other than operating intermittently, the process and its resulting products closely resemble those made in a continuous extrusion process.

In this process, low density foam backings having large lateral cross-sectional areas can be prepared by: 1) forming under pressure a gel of the polymer or blend material and a blowing agent at a temperature at which the viscosity of the gel is sufficient to retain the blowing agent when the gel is allowed to expand; 2) extruding the gel into a holding zone maintained at a temperature and pressure which does not allow the gel to foam, the holding zone having an outlet die defining an orifice opening into a zone of lower pressure at which the gel foams, and an openable gate closing the die orifice; 3) periodically opening the gate; 4) substantially concurrently applying mechanical pressure by a movable ram on the gel to eject it from the holding zone through the die orifice into the zone of lower pressure, at a rate greater than that at which substantial foaming in the die orifice occurs and less than that at which substantial irregularities in cross-sectional area or shape occurs; and 5) permitting the ejected gel to expand unrestrained in at least one dimension to produce the foam backing.

Foams can be optionally perforated to enhance or accelerate gaseous permeation exchange wherein blowing agent exits from the foam and air enters into the foam. The resulting perforated foams have defined therein a multiplicity of channels that are preferably free of direction with respect to the longitudinal extension of the foam. The channels extend from one foam surface at least partially through the foam, and sometimes completely through the foam from one external surface to another external surface. The channels are advantageously present over substantially an entire exterior foam surface, preferably with uniform or substantially uniform spacing. Suitable spacing intervals may be up to and including 2.5 cm, preferably up to and including 1.3 cm. The foams optionally employ a stability control agent of the type described above in combination with perforation to allow accelerated permeation or release of blowing agent while maintaining a dimensionally stable foam. (U.S. Patent. No. 5,424,016, U.S. Patent. No. 5,585,058, WO 92/19439 and WO 97/22455). If desired, the foams of this invention may be post-treated by any known means to increase foam open cell content. Such post-treatment methods include, without limit, mechanically compressing the foam and expanding the foam by exposure to steam or hot air.

In one aspect of the present invention, an extrusion method as discussed above is used. In such a method, all ingredients are mixed together in the extruder and the foam prepared directly when the polymer composition exits out of the extruder. When the one-step process is utilized, it may be desirable to minimize the amount of filler in the polymer composition so as to enhance the mixing of the various ingredients in the polymer composition. In some aspects of the one step process, it may be desirable to use a blowing agent which has previously been dispersed in a polymer composition to improve blendability of the materials. One example of a suitable material is Ficel® SL 50 (Bayer AG, Pittsburgh, PA). This material is believed to be a 50% azodicarbonamide in LDPE. In this process, the polymeric components are mixed with the filler, if any, and the blowing agent and other materials and melted.

In a further aspect, the foam backings of the present invention may be made by a two-step process. In the two-step process, the blowing agent is after added to the fully mixed polymer composition.

The polymer compositions should be subjected to heat for a time sufficient to activate the blowing agent so as to provide a suitable foam. In one aspect, the composition can be heated for 1 to 10 minutes. Still further, the composition can be heated for 1, 2, 3, 4, 5, 6, 7, 8, 9 or 10 minutes, where any value can form an upper or a lower endpoint, as appropriate. Still further, the temperature at which the composition is heated can be from 93 to 260°C (200 to 500 °F). As would be recognized by one of ordinary skills in the art, the temperature needs to be high enough to cause activation of the blowing agent but below the decomposition temperature of the polymer. The optimum temperature to accomplish these objectives may be readily determined by one of ordinary skill in the art without undue experimentation.

In one aspect, the foam backings of the present invention are substantially uncrosslinked. By "substantially uncrosslinked" it is meant that the foams comprise less than 2 % crosslinking. Still further, the foam backings of the present invention are essentially non-cross-linked. The amount of crosslinking of the foam backings does not include any crosslinked portion of the resilient material, which may itself have some crosslinking. In accordance with the present invention, it has been found that the use of the non-crosslinked foam backing materials of the present invention allows ready recycling of the carpet and carpet tiles herein. That is, as would be understood by one of ordinary skill in the art, foam cushion backings prepared from polyurethane materials are crosslinked (thermoset). As such, it is not possible to remelt the backings and re-use them in the same or similar manner as they were originally used. In contrast, the substantially uncross-linked foam backings of the present invention can be re-melted and used again as backings for carpet or carpet tile products or as high value ingredients in products where such properties are needed. Significantly, when recycled, the polymeric components of the foam backings of the present invention retain many, if not most, of the physical properties of the original polymeric component.

Additionally, it has surprisingly been found that foam cushion backings with significant durability and comfort underfoot can be obtained even though the foams are uncrosslinked. That is, it was previously believed that in order to obtain durability and comfort underfoot from an HBEP backing it was necessary to use crosslinked materials. Carpet and carpet tile products having the foam backings of the present invention affixed thereto, with or without the addition of the resilient material as discussed in detail above, have been found to be exceptionally durable and comfortable.

In a further aspect of the present invention, the cushion backing of the present invention is not applied to resilient flooring materials as defined elsewhere herein. Still further, resilient flooring is not within the scope of this invention in that the thickness of the cushion backing herein is unsuited for use in such products. Further, such flooring is not designed for comfort underfoot and will generally not reduce fatigue in a person walking on the surface. As such, the backings disclosed in U.S. Patent No. 5,910,358 are not included within the scope of the present invention. As mentioned above, when used as foam cushion backing for a carpet or carpet tile product, products have been found to be particularly durable and comfortable underfoot when compared to carpet and carpet tiles having prior art foamed carpet or carpet tiles backing, such as PVC or polyurethane. In particular, carpet or carpet tile structures having the foam backings of the present invention exhibit excellent results in the roll stool test.

A further aspect of the present invention relates to a carpet or carpet tile that resists delamination. In particular, the carpet and carpet tile products of the present invention exhibit minimal delamination of the various layers. In these aspects, the carpet and carpet tiles exhibit a delamination strength of one or more of the layers of from 0.45 to 4.50 kg/cm (2.5 to 25 lbs/in), where the degree of delamination is measured according to ASTM D 3936. Still further, the amount of delamination is from 0.45, 0.90, 1.26, 1.80, 2.16, 2.70, 3.06, 3.60, 3.96, 4.80 kg/cm (2.5, 5, 7, 10, 12, 15, 17, 20, 22, or 25 lbs/in) as measured in accordance with ASTM D 3936, where any value can form an upper or lower endpoint, as appropriate. Still further, the carpets and carpet tiles of the invention exhibit a minimum delamination of at least 0.45 kg/cm (2.5 lbs/in) as measured by ASTM D936. As used herein, the delamination values relate to one or more of the layers, that is, the interface between the foam and the primary backing, the interface between the foam and the capcoat or the interface between the foam and the textile backing. As would be recognized by one of ordinary skill in the art, the failure of adhesion at one or more of these interfaces in case, will be considered unacceptable. Thus, the delamination strength values referred to herein are applicable to each of these interfaces.

### EXAMPLES

The following Examples are put forth so as to provide those of ordinary skill in the art with a complete disclosure and description of how the compounds claimed herein are made and evaluated, and are intended to be purely exemplary of the invention. Efforts have been made to ensure accuracy with respect to numbers (*e.g.,* amounts, temperature) but some errors and deviations should be accounted for. Unless indicated otherwise, parts are parts by weight, temperature is in °F or is at room temperature, and pressure is at or near atmospheric.

### Example 1: Cushion Backed Testing with Various Additives in Various Amounts

All samples contained 1 % oil (Sunpar 150 Paraffinic Oil, Sun Chemicals, Philadelphia, PA) All samples had blowing agent post-add compounded unless otherwise specified. (Note that % in post-added were in relation to amount of blowing agent in compound without blowing agent.) Compression resistance numbers are an average of 3 values.
Compression set and density are taken from single measurements.
Samples included fiberglass material foam and felt secondary backing as indicated.

Compression resistance measured according to the following:
A three by three inch sample of backing, *i.e.,* scrim, foam and secondary backing (if present) was compressed 25 % across its thickness for 1 minute and the force to recover the full thickness was measured in psi at ambient temperature (24°C (75 °F)). Values are reported in bar (psi).

Compression set was measured according to the following:
A 7.6 cm x 7.6 cm (three by three inch) sample of backing was compressed 25 % across its thickness for 22 h and allowed to recover for 24 h. The % recovery after 24 h equals the compression set at ambient temperature (24°C (75 °F)). Values are reported in %.

Density was measured by calculating (sample weight/(sample thickness * sample area). Values are reported in g/cm³ (lbs/ft³).
Thickness Below/After: Thickness of material before and after activation of blowing agent. Delamination strength was measured in lbs/ft as measured by ASTM D3936.

| **Product** | **Sources** |
|---|---|
| KC 8852 | Dow Chemical (Midland, MI) |
| EG 8200 | Dow Chemical |
| EG8185 | Dow Chemical |
| XU 60769.07L | Dow Chemical |
| Buna Products | Bayer AG (Pittsburgh, PA) |
| Class C₁F Flyash | Boral Materials Technologies (San Antonio, TX) |
| ADC/S-C2 L-251 | Bayer AG |
| ADC/M-C1 L-241 | Bayer AG |
| Ficel^{®} | Bayer AG |
| 1085 NT Elastomer | Dow Chemical |
| 9042 NT Elastomer | Dow Chemical |
| 1088 NT Elastomer | Dow Chemical |
| Freudenberg 100 PET | Freudenberg Non-wovens Group (Weinheim, DE) |
| Elk Thermally Stable Filler Media | Elk Performance Non-wovens (Ennis, TX) |
| W.G. Steve PET Blend | W.E. Steven Co. (Dalton, GA) |

### Example 1

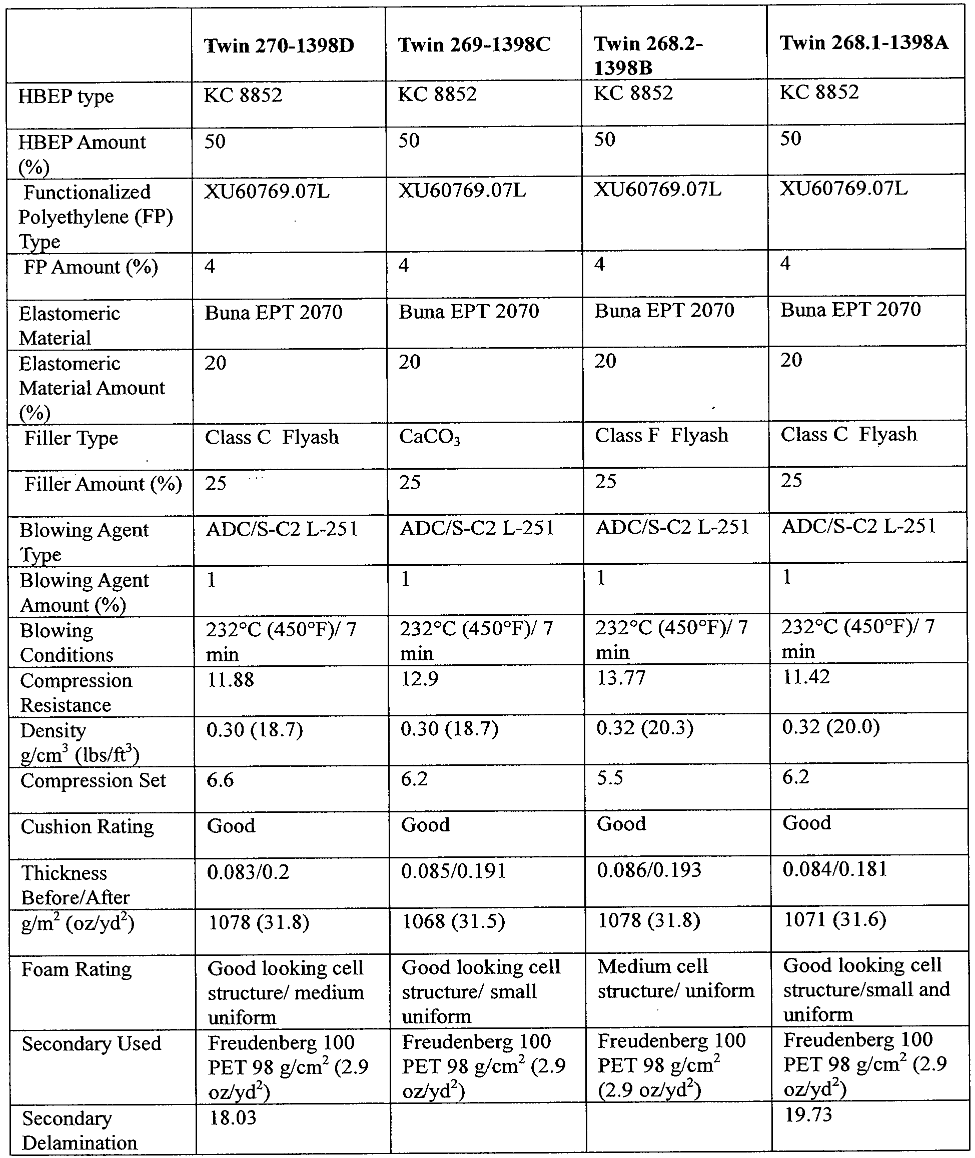

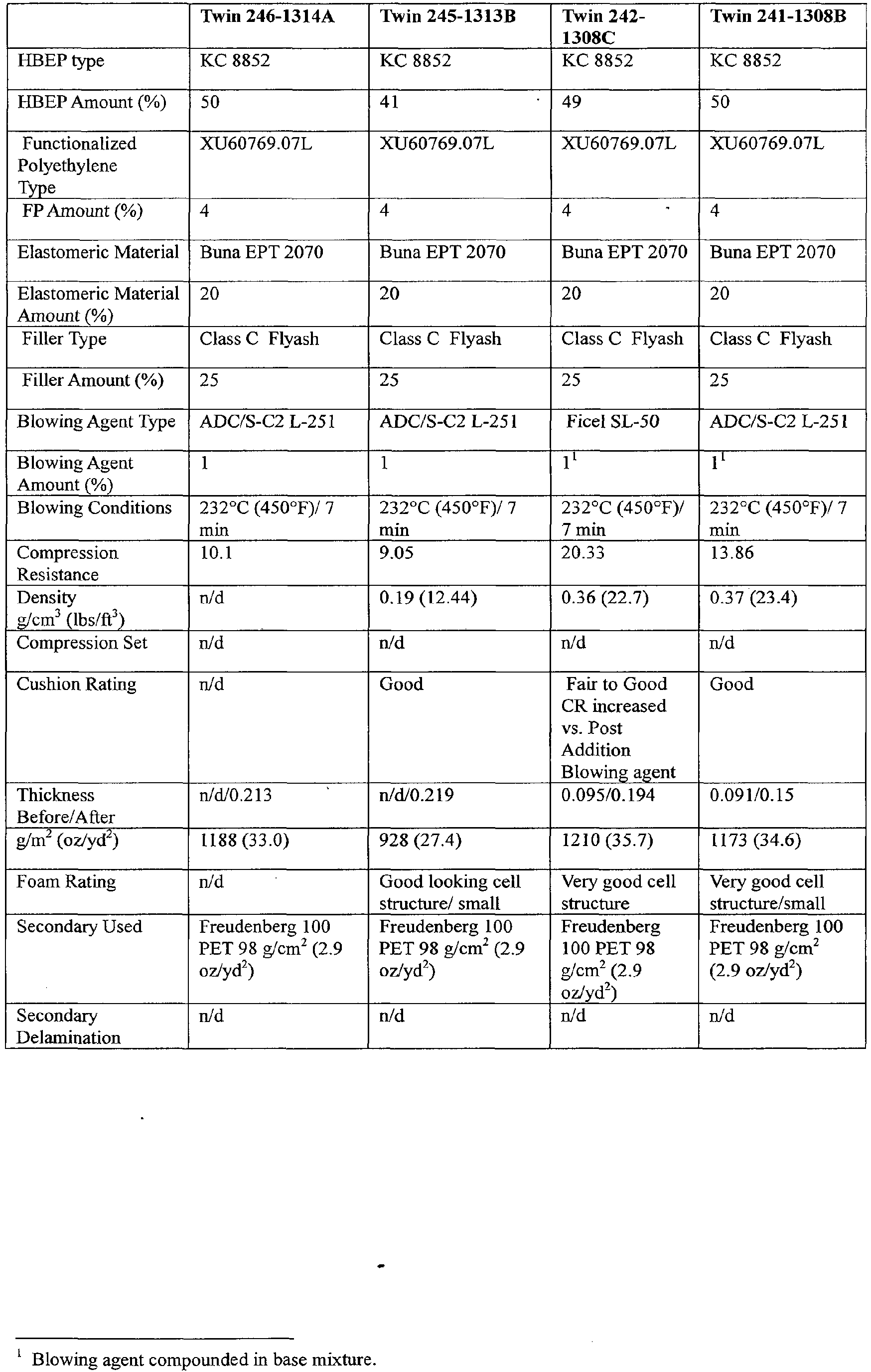

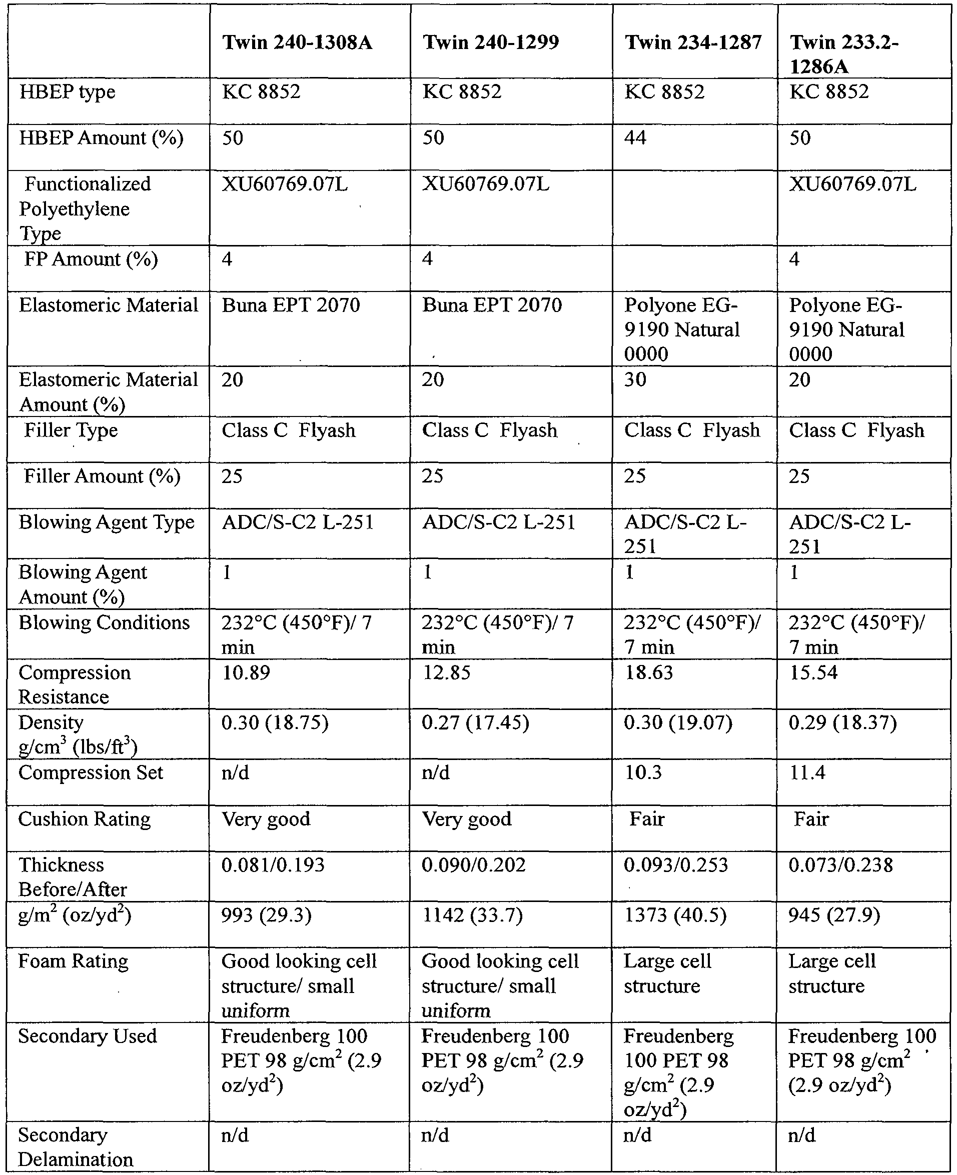

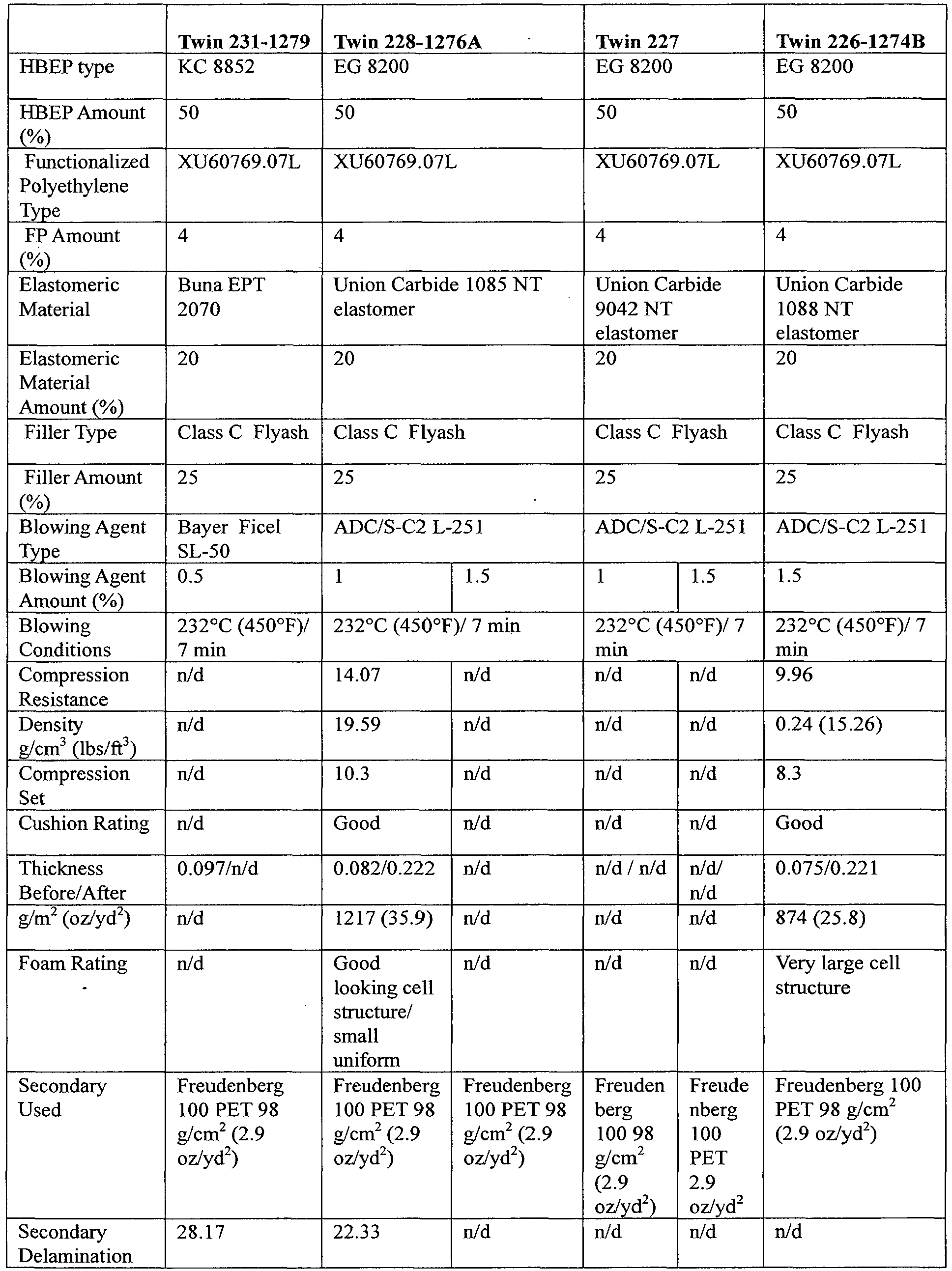

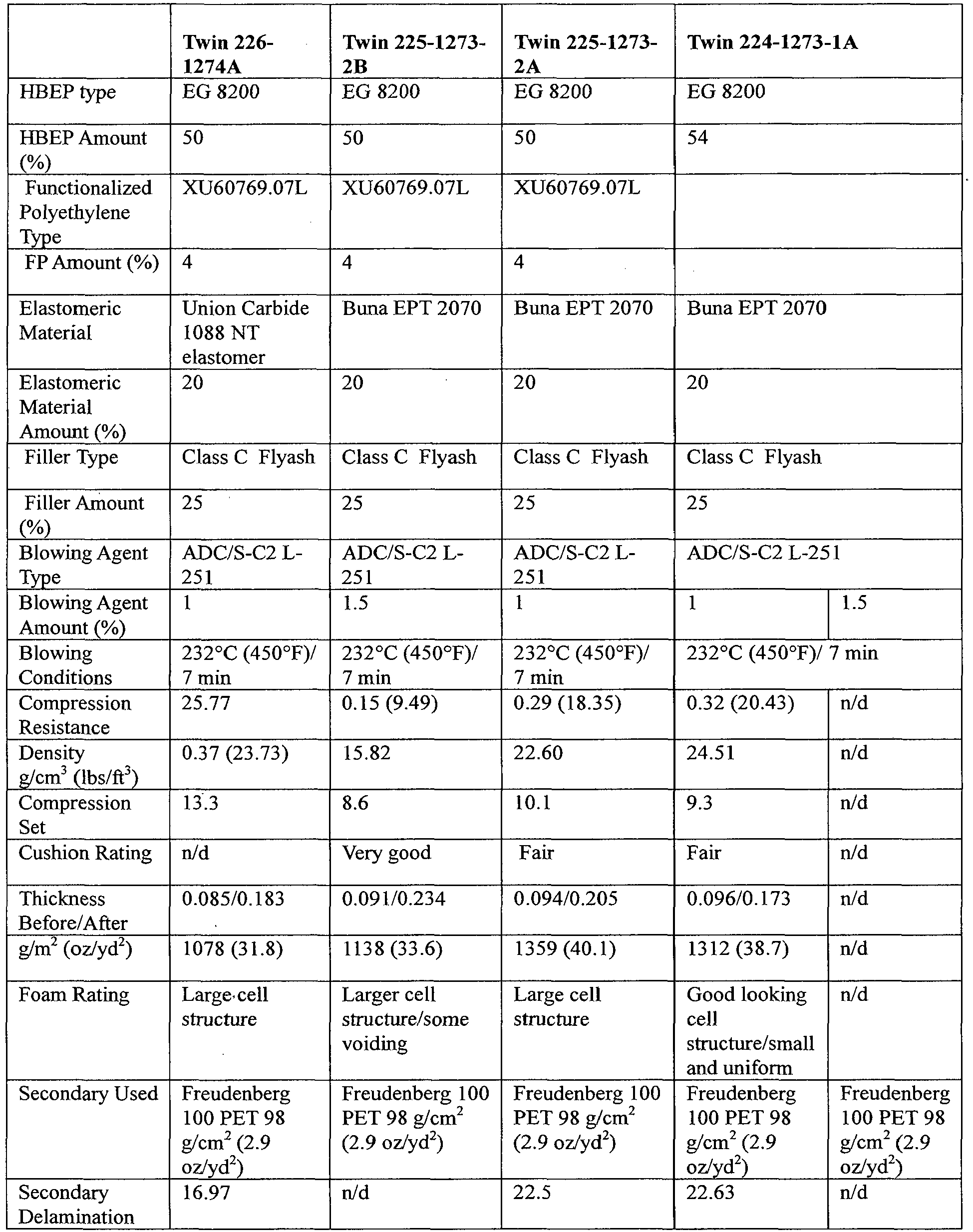

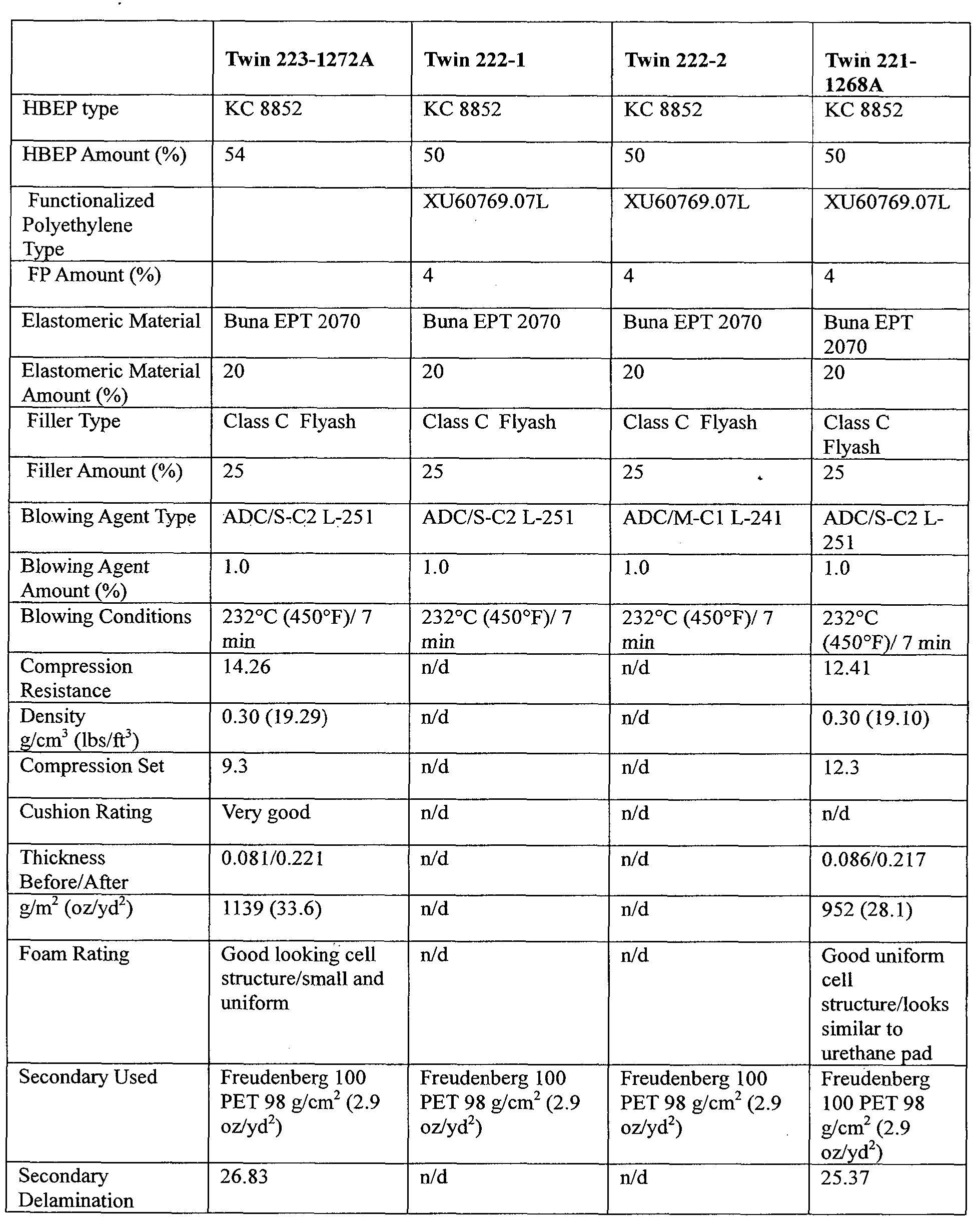

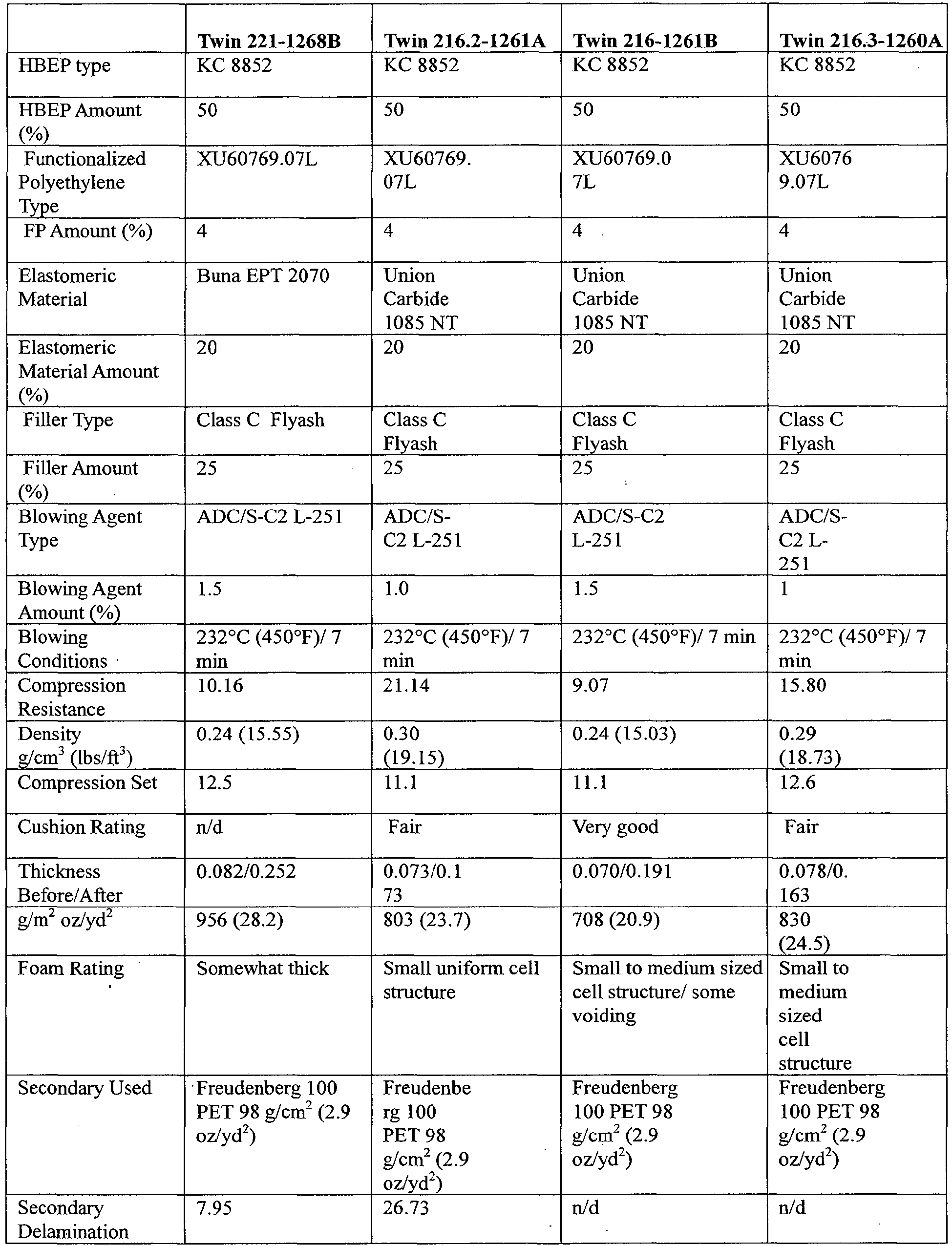

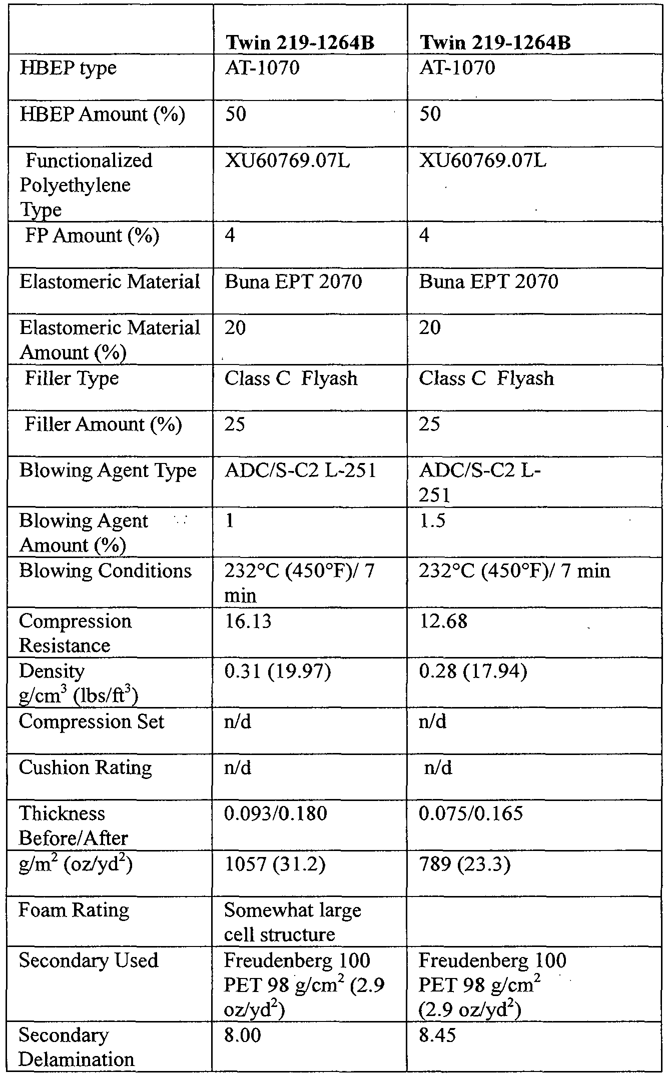

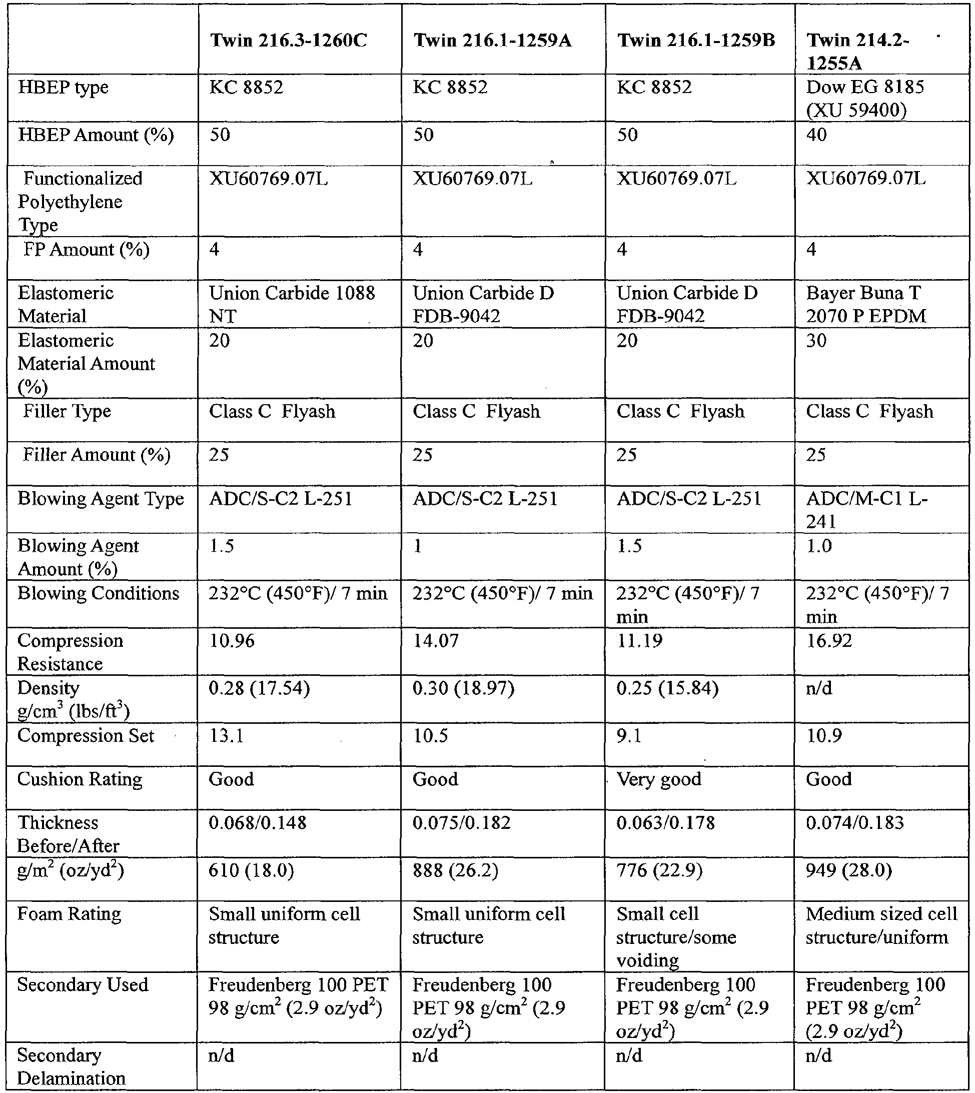

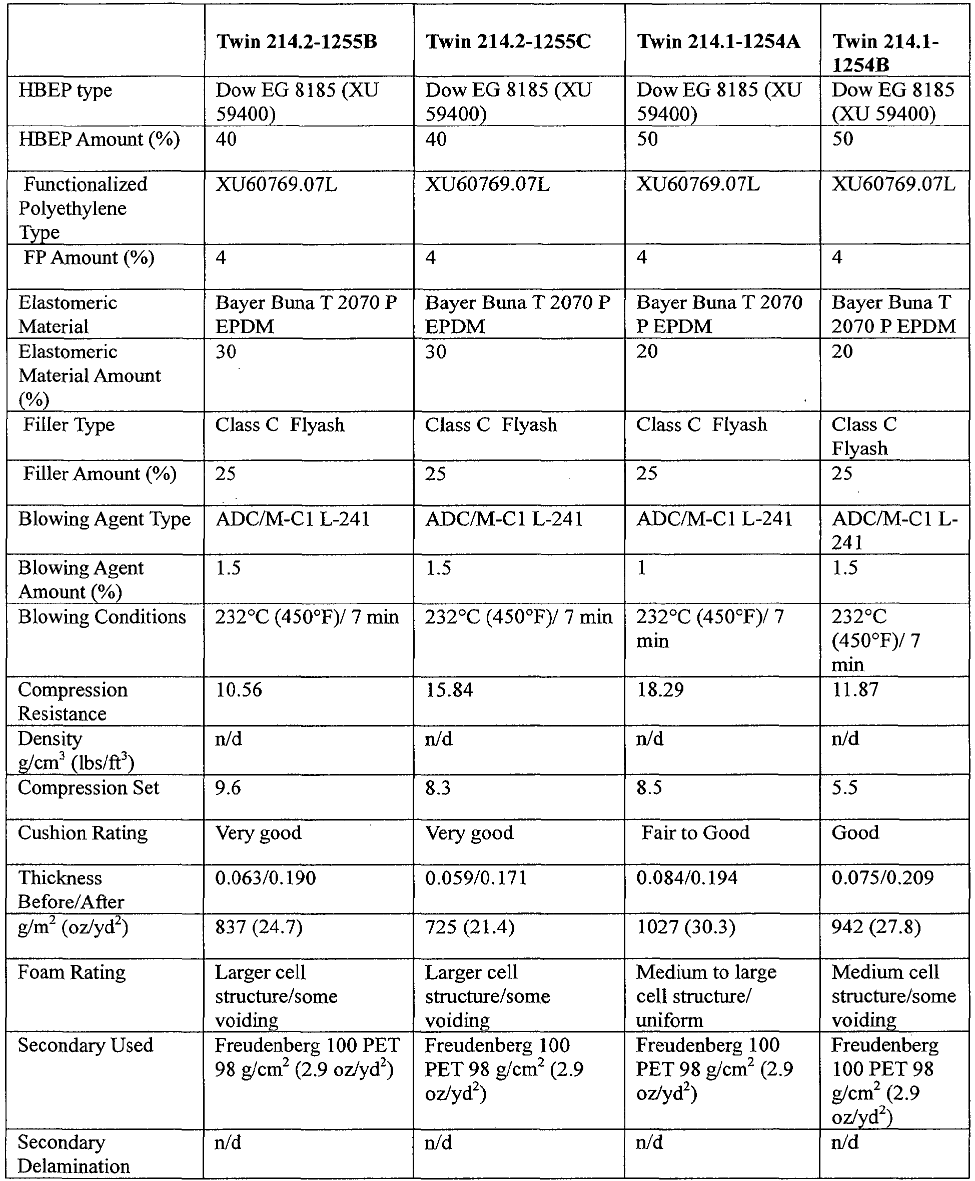

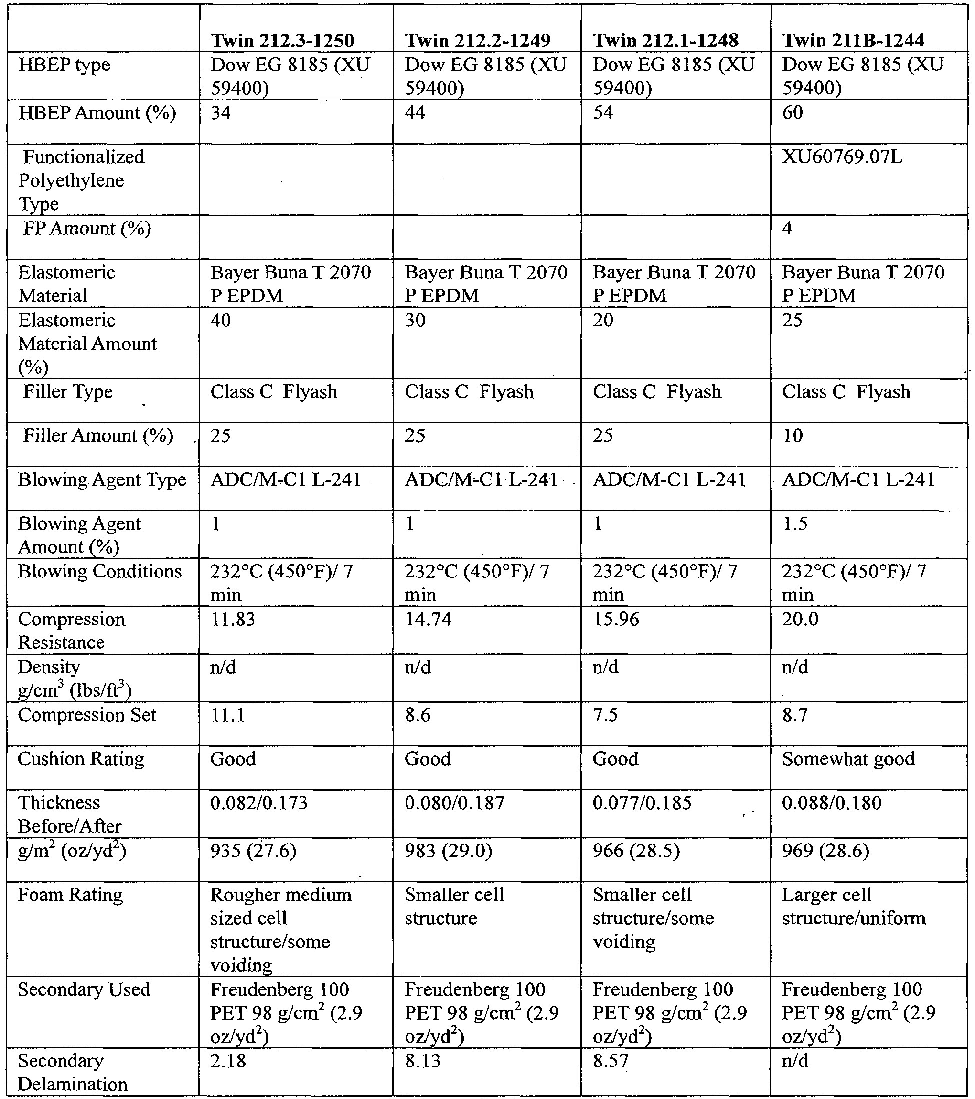

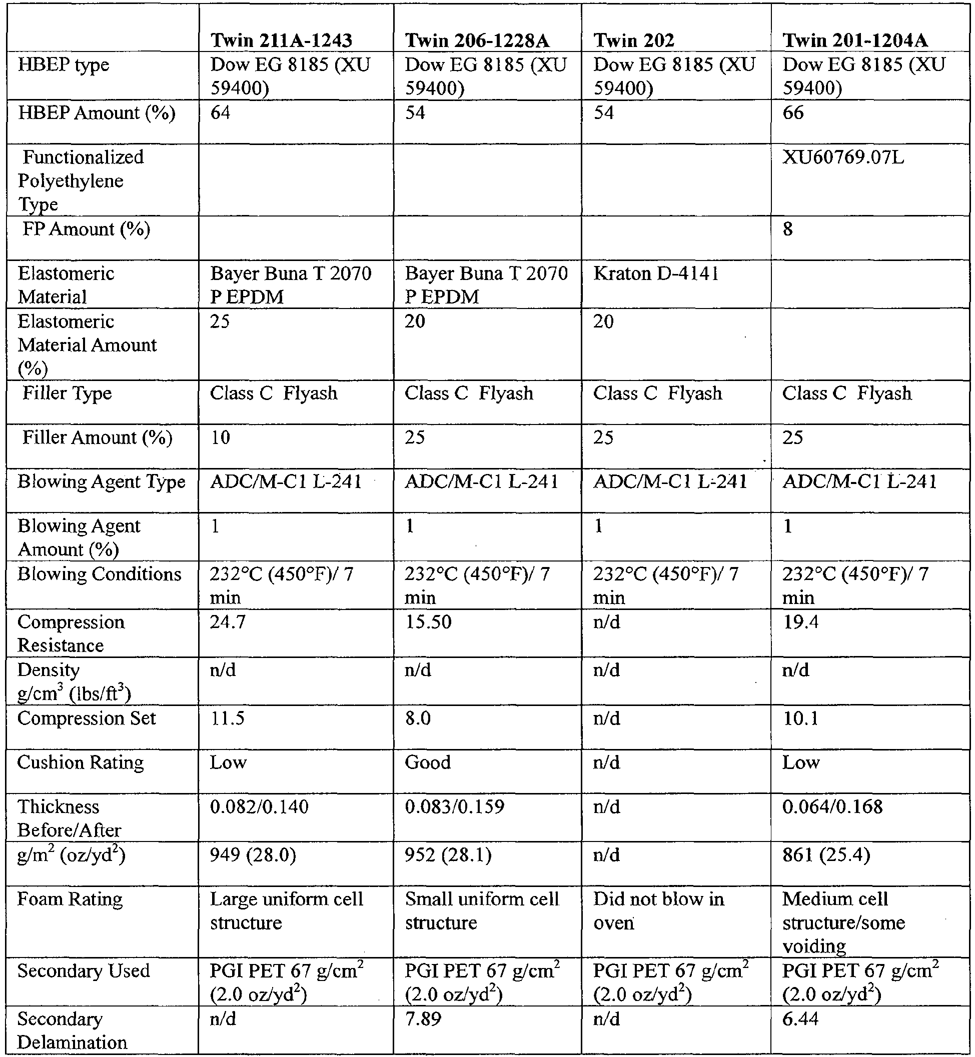

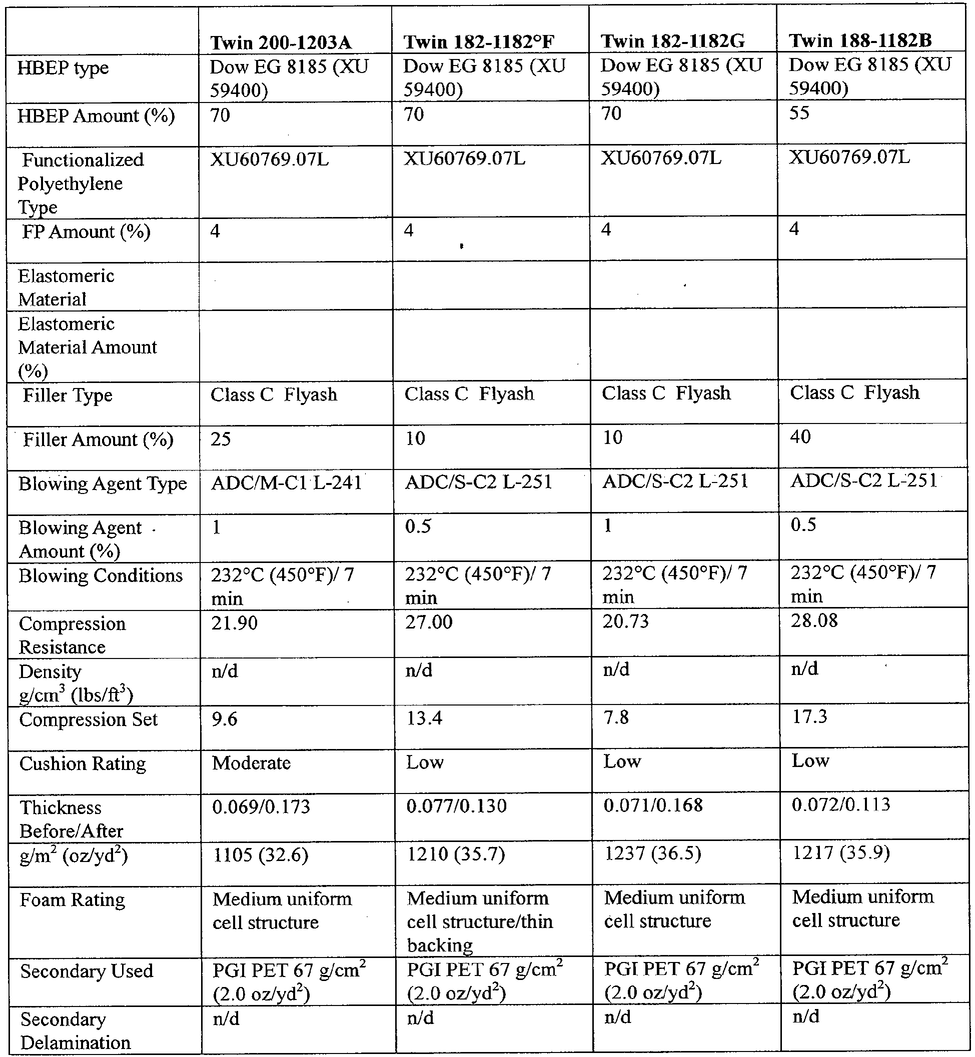

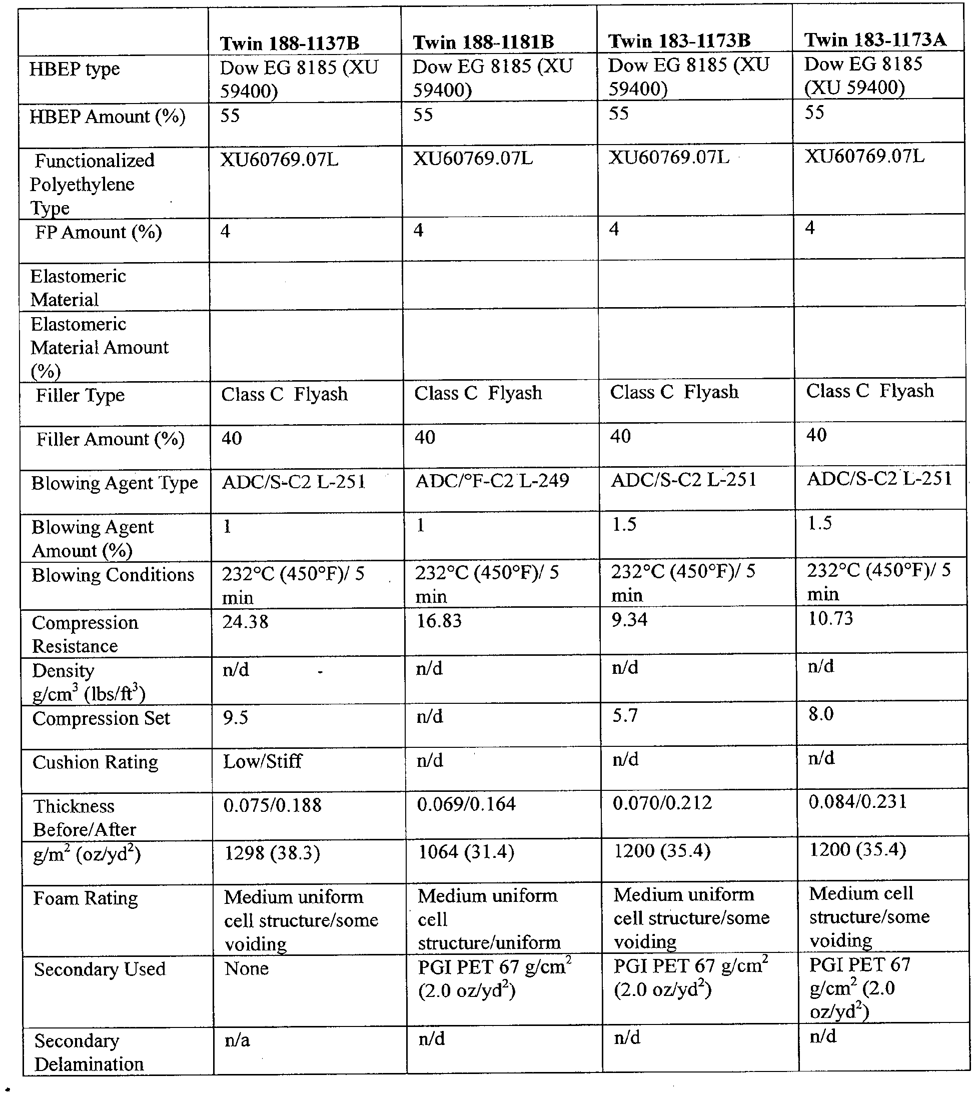

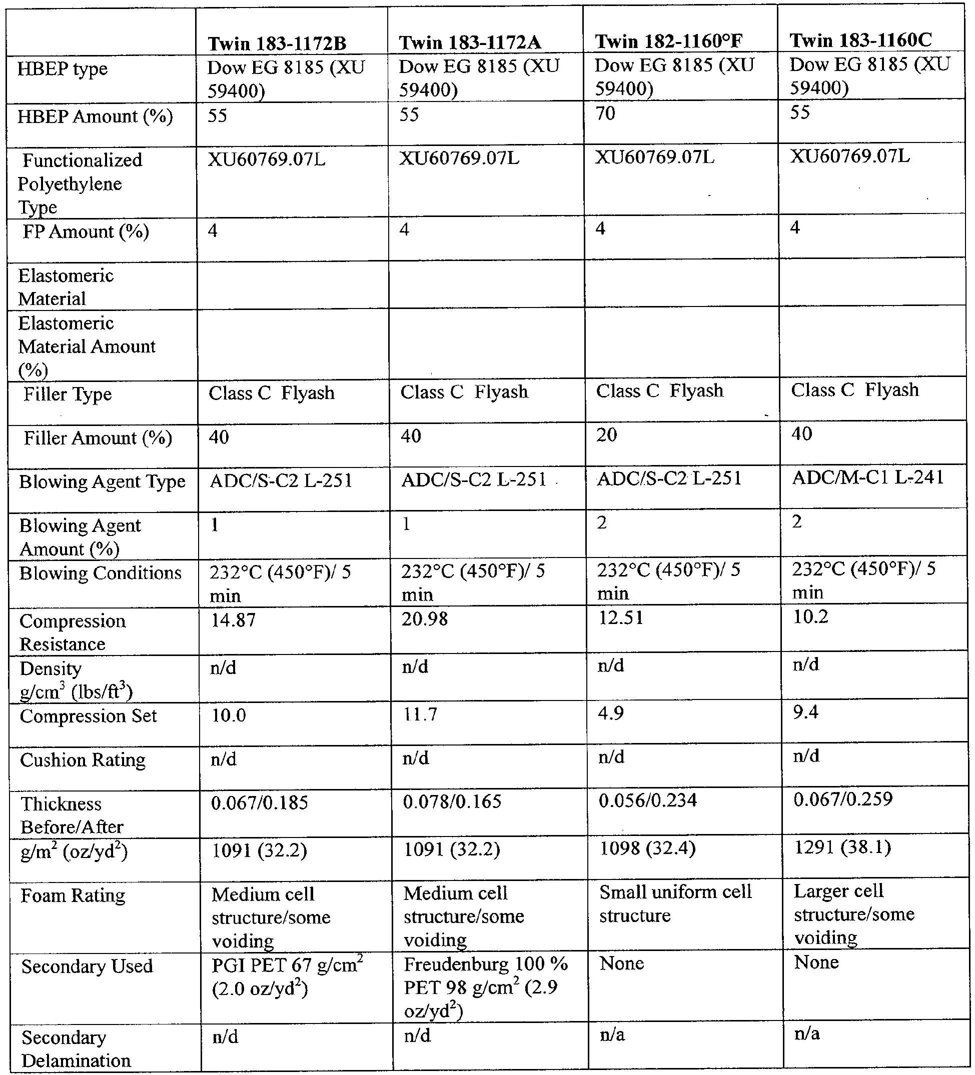

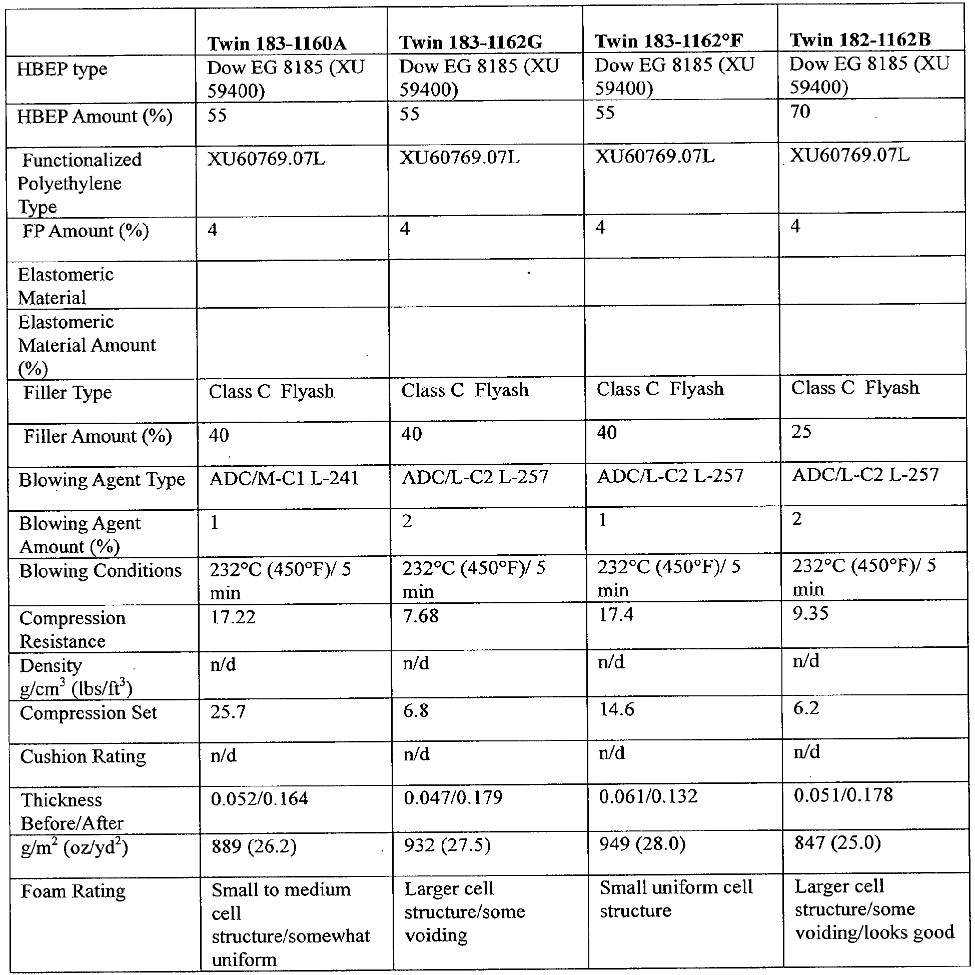

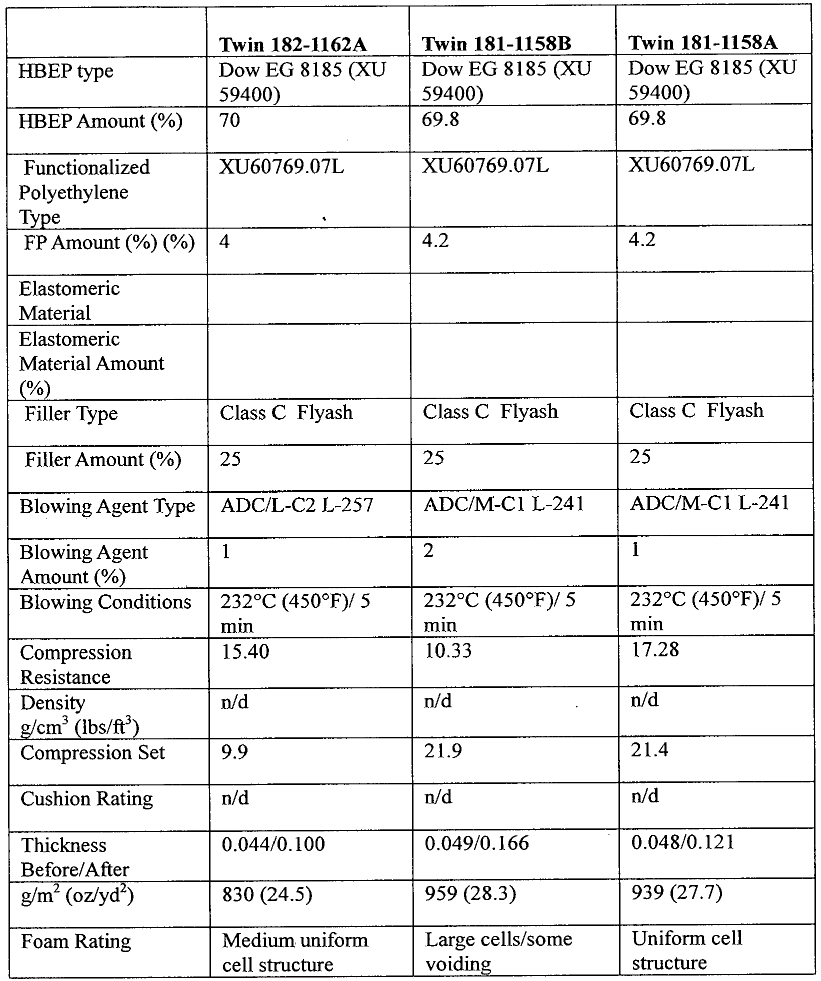

### Example 2: Testing of Cushion-Backed Products Having Blowing Agent, Class C Fly Ash and Resilient Material

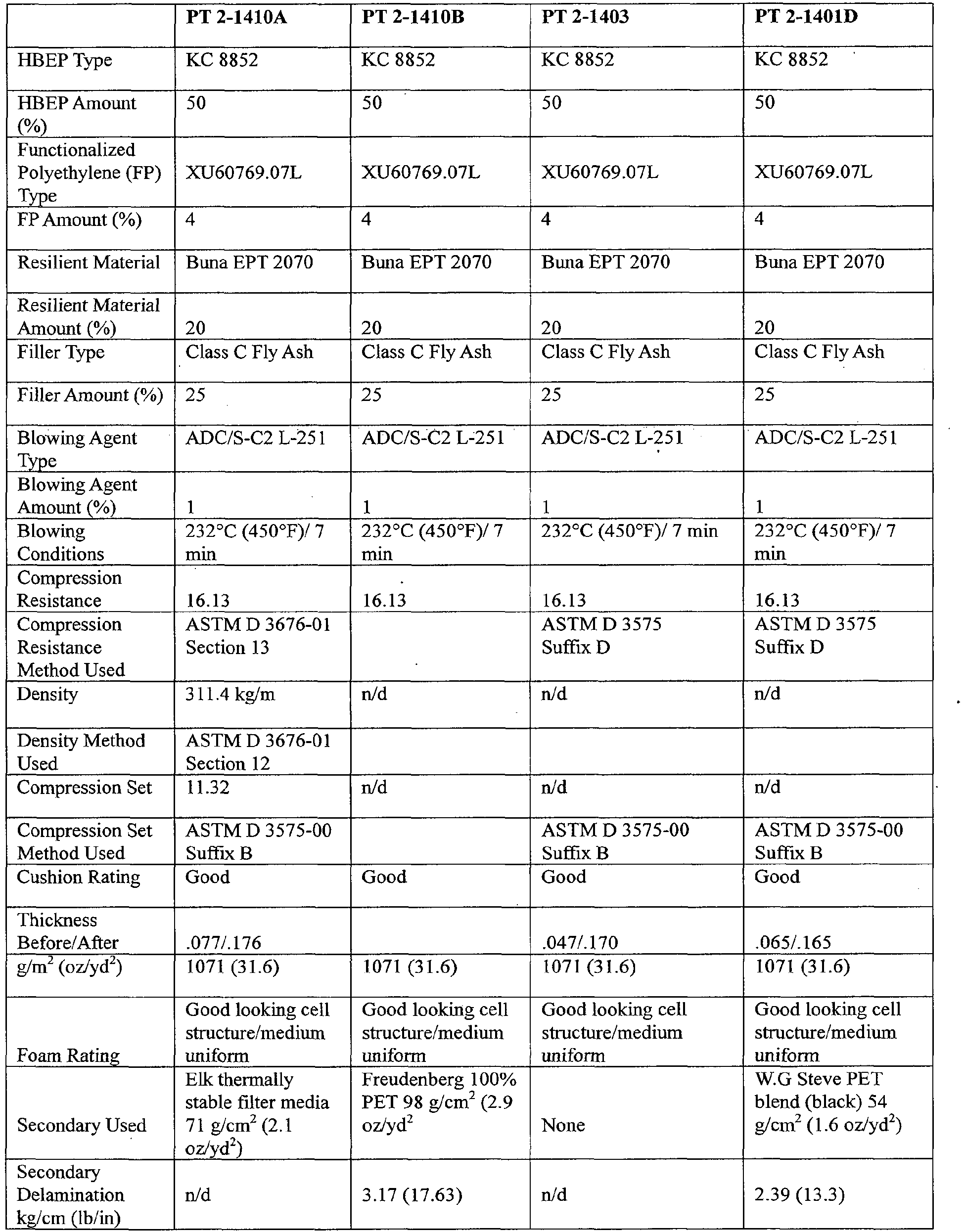

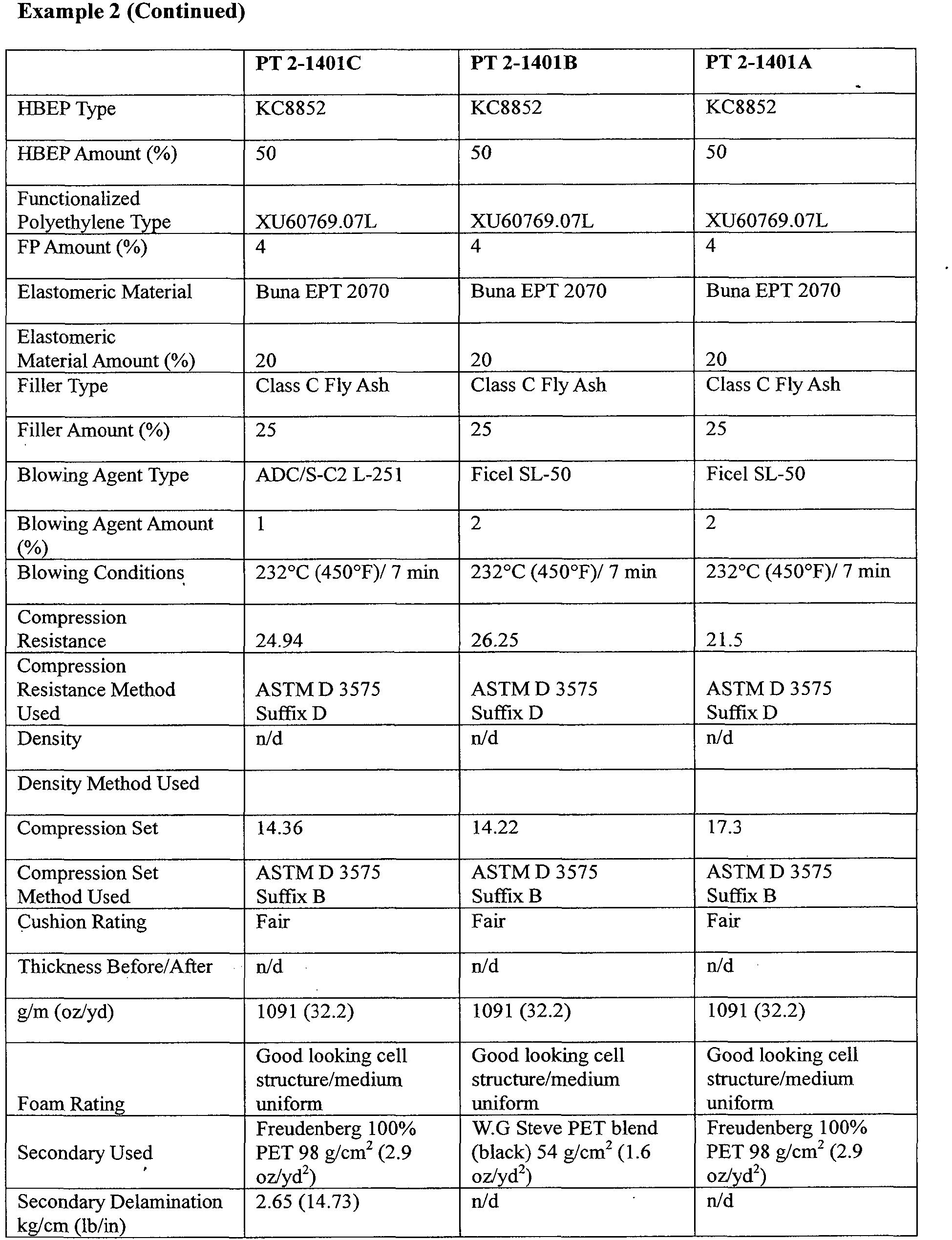

Material Sources as in Example 1.

### Example 3

| **Blowing Agent** | **Add-on Weight (g/cm² (oz/yd²))** | | **Thickness before blowing (cm (inches))** | **Density g/cm³ (lb/ft³)** | **Compression Resistance (bar (psi))** |
|---|---|---|---|---|---|
| | **Foam** | **Cap Coat** | | | |
| 1% L251 | 1071 (31.6) | 397(11.7) | 0.46 (0.181) | 0.42 (26.05) | 1.65 (23.9) |
| 1.5% L251 | 844 (24.9) | 397(11.7) | 0.46 (0.181) | 0.32 (20.21) | 1.01 (14.6) |

Samples included fiberglass, foam and capcoat.
Capcoat applied before activation of blowing agent. Foam and capcoat comprised of: 24% Affinity 8185; 4% Amplify GR204; 11% Piccotac^{®} 1115; 1% Sunpar^{®} 150; 60% Class C Fly Ash.
Blowing agent post-added to polymer composition to make foam. Foam blown at 7 min at 232°C (450 °F). Density measurements include contribution of capcoat layer.

## Claims

1. A foam cushion backing comprising a foamable polymer composition comprising:
one or more of a homogenously branched ethylene polymer (HBEP) or a substantially linear ethylene polymer (SLEP), wherein a foam cushion backing is prepared from the foamable polymer composition, wherein the foam cushion backing comprises less than 2% crosslinking, wherein the foam cushion backing has a thickness of greater than 0.19 cm (0.075 inches) and a density of from 0.16 to 0.48 g/cm³ (10 to 30 lbs/ft³), and wherein the foam cushion backing is suitable for use in carpet or carpet tiles.

2. The foam cushion backing of claim 1, which
(i) comprises the SLEP; or
(ii) has a thickness of from 0.245 to 0.572 cm (0.100 to 0.225 inches).

3. The foam cushion backing of claim 1, wherein the foamable polymer composition further comprises an adhesive material and wherein the adhesive material comprises a functionalized polymer or copolymer, preferably
(i) the foamable polymer composition comprises from greater than 0 to 10 % of the functionalized polymer or copolymer, as measured by total weight of the foamable polymer composition; or
(ii) the functionalized polymer or copolymer material comprises maleic anhydride grafted to an ethylene polymer.

4. The foam cushion backing of claim 1, wherein the foamable polymer composition further comprises a filler.

5. A carpet or carpet tile comprising a precoated greige good having a face side and a back side, wherein the precoated greige good has the foam cushion backing of claim 1 affixed to the back side thereof with an adhesive material.

6. The carpet or carpet tile of claim 5,
(i) wherein the foam cushion backing is affixed to the back side of the precoated greige good with an adhesive material that is separately applied to either or both of the back side of the precoated greige good and foam cushion backing; or
(ii) wherein the foam cushion backing is affixed to the back side of the precoated greige good with an adhesive material that is incorporated in the polymer composition; or
(iii) which has a compression set of from 1 to 20%, where the % refers to the % recovery of the backing after a 7.6 cm x 7.6 cm (3" x 3") sample is compressed at 25% for 22 h at ambient temperature; or
(iv) which has a compression set of from 8 to 20%, as measured by ASTM 3575 Suffix B; or
(v) which has a compression resistance of from 0.34 to 1.72 bar (5 to 25 psi), which is measured by compressing a 7.6 cm x 7.6 cm (3" x 3") sample of backing across the thickness for 1 min and the force to recover the thickness is measured, and where the temperature is at ambient; or
(vi) which has a compression resistance of from 1.24 to 2.21 bar (18 to 32 psi), as measured by ASTM 3575 Suffix D; or
(vii) wherein the foam cushion backing has an outer surface and wherein the outer surface has a woven or non-woven textile material affixed thereto; or
(viii) wherein the foam cushion backing has an outer surface and wherein the outer surface has an ethylene polymer cap coat affixed thereto, preferably the capcoat is present at from 170 to 848 g/m² (5 to 25 oz/yd²); or
(ix) which has a delamination strength of greater than 0.45 kg/cm (2.5 lbs/in) as measured by ASTM D3936; or
(x) which has a scrim incorporated on a surface of the foam cushion backing adjacent to the adhesive material.

7. The foam cushion backing of claim 1 further comprising one or more resilient materials.

8. The foam cushion backing of claim 7,
(i) wherein the resilient material comprises one or more of: ethylenepropylene-diene monomer rubber (EPDM), ethylene-propylene monomer rubber (EPM), acrylonitrile-butadiene (NBR), styrene-butadiene (SBR), carboxylated NBR, carboxylated SBR, styrene block copolymer, thermoplastic elastomer and flexible very low density polyethylene resins, preferably the resilient material is present in the polymer composition at from 5 to 40 % by weight of the foamable polymer composition; or
(ii) which comprises the SLEP; or
(iii) which has a thickness of from 0.245 to 0.572 cm (0.100 to 0.225 inches); or
(iv) wherein the foamable polymer composition further comprises an adhesive material, and wherein the adhesive material comprises a functionalized polymer or copolymer, preferably
- the foamable polymer composition comprises from greater than 0 to 10 % of the functionalized polymer or copolymer, as measured by total weight of the foamable polymer composition, or
- the functionalized polymer or copolymer material comprises maleic anhydride grafted to an ethylene polymer; or
(v) wherein the foamable polymer composition further comprises a filler.

9. A carpet or carpet tile comprising a precoated greige good having a face side and a back side, wherein the precoated greige good has the foam cushion backing of claim 7 affixed to the back side thereof with an adhesive material.

10. The carpet or carpet tile of claim 9,
(i) wherein the foam cushion backing is affixed to the back side of the carpet or carpet tile product with an adhesive material that is separately applied to either or both of the back side of the carpet or carpet tile structure and the foam cushion backing; or
(ii) wherein the foam cushion backing is affixed to the back side of the precoated greige good with an adhesive material that is incorporated in the polymer composition; or
(iii) which has a compression set of from 1 to 20%, where the % refers to the % recovery of the backing after a 7.6 cm x 7.6 cm (3" x 3") sample is compressed at 25% for 22 h at ambient temperature; or
(iv) which has a compression set of from 8 to 20%, as measured by ASTM 3575 Suffix B; or
(v) which has a compression resistance of from 0.34 to 1.72 bar (5 to 25 psi), which is measured by compressing a 7.6 cm x 7.6 cm (3" x 3") sample of backing across the thickness for 1 min and the force to recover the thickness is measured, and where the temperature is at ambient; or
(vi) which has a compression resistance of from 1.24 to 2.21 bar (18 to 32 psi), as measured by ASTM 3575 Suffix D; or
(vii) wherein the foam cushion backing has an outer surface, and wherein the outer surface has an ethylene polymer capcoat affixed thereto, preferably the capcoat is present at from 170 to 848 g/m² (5 to 25 oz/yd²); or
(viii) wherein the foam cushion backing has an outer surface, and wherein the outer surface has a woven or non-woven textile backing affixed thereto; or
(ix) which has delamination strength of greater than 0.45 kg/cm (2.5 lbs/in) as measured by ASTM D3936; or
(x) which has a scrim incorporated on a surface of the foam cushion backing adjacent to the adhesive material.

11. A method for making a foam cushion backing suitable for use in a carpet or carpet tile, wherein the method comprises:
(a) providing a polymer composition comprising:
(i) one or more of a homogenously branched ethylene polymer ("HBEP") or a substantially linear ethylene polymer ("SLEP"); and
(ii) a blowing agent;
(b) applying the polymer composition to a surface suitable to provide a foam cushion backing after activation of the blowing agent; and
(c) activating the blowing agent,
thereby providing a foam cushion backing suitable for use in a carpet or carpet tile, wherein the foam cushion backing comprises less than 2% crosslinking, wherein the foam cushion backing has a thickness of greater than 0.19 cm (0.075 inches) and a density of from 0.16 to 0.48 g/cm³ (10 to 30 lbs/ft³).

12. The method of claim 11,
(i) which further comprises providing a precoated greige good, wherein the surface is the precoated greige good, and wherein the blowing agent is activated after application of the polymer composition to the greige good, thereby providing a carpet structure having a foam cushion backing adhered thereto, preferably the carpet structure having the foam cushion backing adhered thereto has a delamination strength of greater than 0.45 kg/cm (2.5 lbs/in) as measured by ASTM D3936; or
(ii) which further comprises providing a precoated greige good, wherein the foam cushion backing is laminated to the precoated greige good with an adhesive material after activation of the blowing agent, preferably the foam cushion backed carpet structure has a delamination strength of greater than 0.45 kg/cm (2.5 lbs/in) as measured by ASTM D3936; or
(iii) wherein the polymer composition comprises a filler; or
(iv) wherein the polymer composition comprises a resilient material, preferably the resilient material comprises one or more of: ethylenepropylene-diene monomer rubber (EPDM), ethylene-propylene monomer rubber (EPM), acrylonitrile-butadiene (NBR), styrene-butadiene (SBR), carboxylated NBR, carboxylated SBR, styrene block copolymer, thermoplastic elastomer and flexible very low density polyethylene resins, most preferably the resilient material is present in the polymer composition at from 5 to 40 % by weight of the foamable polymer composition; or
(v) which further comprises introducing a scrim onto the foamable polymer composition prior to activation of the blowing agent, thereby providing a foam cushion backing having a scrim attached to a side thereof.

## Patentansprüche

1. Schaumpolsterkaschierung, umfassend eine schäumbare Polymerzusammensetzung, umfassend: eines oder mehrere aus einem homogen verzweigten Ethylenpolymer (HBEP) oder einem im Wesentlichen linearen Ethylenpolymer (SLEP), wobei aus der schäumbaren Polymerzusammensetzung eine Schaumpolsterkaschierung hergestellt wird, wobei die Schaumpolsterkaschierung weniger als 2 % Vernetzung umfasst, wobei die Schaumpolsterkaschierung eine Dicke von mehr als 0,19 cm (0,075 Zoll) und eine Dichte von 0,16 bis 0,48 g/cm³ (10 bis 30 Pfund/Kubikfuß) aufweist und wobei die Schaumpolsterkaschierung zur Verwendung bei Teppichen oder Teppichfliesen geeignet ist.

2. Schaumpolsterkaschierung gemäß Anspruch 1, die
(i) das SLEP umfasst; oder
(ii) eine Dicke von 0,245 bis 0,572 cm (0,100 bis 0,225 Zoll) aufweist.

3. Schaumpolsterkaschierung gemäß Anspruch 1, wobei die schäumbare Polymerzusammensetzung weiterhin einen Klebstoff umfasst und wobei der Klebstoff ein funktionalisiertes Polymer oder Copolymer umfasst, wobei vorzugsweise
(i) die schäumbare Polymerzusammensetzung mehr als 0 bis 10 % des funktionalisierten Polymers oder Copolymers umfasst, gemessen anhand des Gesamtgewichts der schäumbaren Polymerzusammensetzung; oder
(ii) das funktionalisierte Polymer oder Copolymermaterial auf ein Ethylenpolymer gepfropftes Maleinsäureanhydrid umfasst.

4. Schaumpolsterkaschierung gemäß Anspruch 1, wobei die schäumbare Polymerzusammensetzung weiterhin einen Füllstoff umfasst.

5. Teppich oder Teppichfliese, umfassend eine vorbeschichtete Rohware mit einer Vorderseite und einer Rückseite, wobei die vorbeschichtete Rohware die Schaumpolsterkaschierung gemäß Anspruch 1 aufweist, die mit einem Klebstoff auf ihrer Rückseite befestigt ist.

6. Teppich oder Teppichfliese gemäß Anspruch 5,
(i) wobei die Schaumpolsterkaschierung mit einem Klebstoff, der getrennt auf die Rückseite der vorbeschichteten Rohware oder die Schaumpolsterkaschierung oder beide aufgetragen wird, auf der Rückseite der vorbeschichteten Rohware befestigt ist; oder
(ii) wobei die Schaumpolsterkaschierung mit einem Klebstoff, der in die Polymerzusammensetzung eingearbeitet ist, auf der Rückseite der vorbeschichteten Rohware befestigt ist; oder
(iii) der oder die einen Druckverformungsrest von 1 bis 20 % aufweist, wobei sich "%" auf die prozentuale Rückbildung der Kaschierung bezieht, nachdem eine 7,6 cm x 7,6 cm (3 Zoll x 3 Zoll) große Probe 22 h lang bei Umgebungstemperatur um 25% zusammengedrückt wurde; oder
(iv) der oder die einen gemäß ASTM 3575 Suffix B gemessenen Druckverformungsrest von 8 bis 20% aufweist; oder
(v) der oder die eine Druckfestigkeit von 0,34 bis 1,72 bar (5 bis 25 psi) aufweist, die gemessen wird, indem man eine 7,6 cm x 7,6 cm (3 Zoll x 3 Zoll) große Probe der Kaschierung 1 min lang in Dickenrichtung zusammendrückt und die Kraft zur Wiederherstellung der Dicke misst, wobei die Temperatur Umgebungstemperatur ist; oder
(vi) der oder die eine gemäß ASTM 3575 Suffix D gemessene Druckfestigkeit von 1,24 bis 2,21 bar (18 bis 32 psi) aufweist; oder
(vii) wobei die Schaumpolsterkaschierung eine Außenfläche aufweist und wobei die Außenfläche ein daran befestigtes gewebtes Textilmaterial oder Vliesmaterial aufweist; oder
(viii) wobei die Schaumpolsterkaschierung eine Außenfläche aufweist und wobei die Außenfläche eine daran befestigte Ethylenpolymer-Verschleißbeschichtung aufweist, wobei die Verschleißbeschichtung vorzugsweise in einer Menge von 170 bis 848 g/m² (5 bis 25 Unzen/Quadratyard) vorhanden ist; oder
(ix) der oder die eine gemäß ASTM D3936 gemessene Delaminierungsfestigkeit von mehr als 0,45 kg/cm (2,5 Pfund/Zoll) aufweist; oder
(x) der oder die ein Textil aufweist, das angrenzend an den Klebstoff auf einer Oberfläche der Schaumpolsterkaschierung eingearbeitet ist.

7. Schaumpolsterkaschierung gemäß Anspruch 1, die weiterhin ein oder mehrere elastische Materialien umfasst.

8. Schaumpolsterkaschierung gemäß Anspruch 7,
(i) wobei das elastische Material eines oder mehrere der folgenden umfasst: Ethylen-Propylen-Dienmonomer-Kautschuk (EPDM), Ethylen-Propylen-Monomer-Kautschuk (EPM), Acrylnitril-Butadien-Kautschuk (NBR), Styrol-Butadien-Kautschuk (SBR), carboxylierten NBR, carboxylierten SBR, Styrol-Blockcopolymer, thermoplastisches Elastomer und flexible Polyethylenharze sehr geringer Dichte, wobei das elastische Material vorzugsweise in der Polymerzusammensetzung in einer Menge von 5 bis 40 Gew.-% der schäumbaren Polymerzusammensetzung vorhanden ist; oder
(ii) die das SLEP umfasst; oder
(iii) die eine Dicke von 0,245 bis 0,572 cm (0,100 bis 0,225 Zoll) aufweist; oder
(iv) wobei die schäumbare Polymerzusammensetzung weiterhin einen Klebstoff umfasst und wobei der Klebstoff ein funktionalisiertes Polymer oder Copolymer umfasst, wobei vorzugsweise
- die schäumbare Polymerzusammensetzung mehr als 0 bis 10 % des funktionalisierten Polymers oder Copolymers umfasst, gemessen anhand des Gesamtgewichts der schäumbaren Polymerzusammensetzung; oder
- das funktionalisierte Polymer oder Copolymermaterial auf ein Ethylenpolymer gepfropftes Maleinsäureanhydrid umfasst; oder
(v) wobei die schäumbare Polymerzusammensetzung weiterhin einen Füllstoff umfasst.

9. Teppich oder Teppichfliese, umfassend eine vorbeschichtete Rohware mit einer Vorderseite und einer Rückseite, wobei die vorbeschichtete Rohware die Schaumpolsterkaschierung gemäß Anspruch 7 aufweist, die mit einem Klebstoff auf ihrer Rückseite befestigt ist.

10. Teppich oder Teppichfliese gemäß Anspruch 9,
(i) wobei die Schaumpolsterkaschierung mit einem Klebstoff, der getrennt auf die Rückseite der vorbeschichteten Rohware oder die Schaumpolsterkaschierung oder beide aufgetragen wird, auf der Rückseite der vorbeschichteten Rohware befestigt ist; oder
(ii) wobei die Schaumpolsterkaschierung mit einem Klebstoff, der in die Polymerzusammensetzung eingearbeitet ist, auf der Rückseite der vorbeschichteten Rohware befestigt ist; oder
(iii) der oder die einen Druckverformungsrest von 1 bis 20 % aufweist, wobei sich "%" auf die prozentuale Rückbildung der Kaschierung bezieht, nachdem eine 7,6 cm x 7,6 cm (3 Zoll x 3 Zoll) große Probe 22 h lang bei Umgebungstemperatur um 25% zusammengedrückt wurde; oder
(iv) der oder die einen gemäß ASTM 3575 Suffix B gemessenen Druckverformungsrest von 8 bis 20% aufweist; oder
(v) der oder die eine Druckfestigkeit von 0,34 bis 1,72 bar (5 bis 25 psi) aufweist, die gemessen wird, indem man eine 7,6 cm x 7,6 cm (3 Zoll x 3 Zoll) große Probe der Kaschierung 1 min lang in Dickenrichtung zusammendrückt und die Kraft zur Wiederherstellung der Dicke misst, wobei die Temperatur Umgebungstemperatur ist; oder
(vi) der oder die eine gemäß ASTM 3575 Suffix D gemessene Druckfestigkeit von 1,24 bis 2,21 bar (18 bis 32 psi) aufweist; oder
(vii) wobei die Schaumpolsterkaschierung eine Außenfläche aufweist und wobei die Außenfläche eine daran befestigte Ethylenpolymer-Verschleißbeschichtung aufweist, wobei die Verschleißbeschichtung vorzugsweise in einer Menge von 170 bis 848 g/m² (5 bis 25 Unzen/Quadratyard) vorhanden ist; oder
(viii) wobei die Schaumpolsterkaschierung eine Außenfläche aufweist und wobei die Außenfläche ein daran befestigtes gewebtes Textilmaterial oder Vliesmaterial aufweist; oder
(ix) der oder die eine gemäß ASTM D3936 gemessene Delaminierungsfestigkeit von mehr als 0,45 kg/cm (2,5 Pfund/Zoll) aufweist; oder
(x) der oder die ein Textil aufweist, das angrenzend an den Klebstoff auf einer Oberfläche der Schaumpolsterkaschierung eingearbeitet ist.

11. Verfahren zur Herstellung einer Schaumpolsterkaschierung, die zur Verwendung bei einem Teppich oder einer Teppichfliese geeignet ist, wobei das Verfahren umfasst:
(a) Bereitstellen einer Polymerzusammensetzung, umfassend:
(i) eines oder mehrere aus einem homogen verzweigten Ethylenpolymer ("HBEP") oder einem im Wesentlichen linearen Ethylenpolymer ("SLEP"); und
(ii) ein Treibmittel;
(b) Auftragen der Polymerzusammensetzung auf eine Fläche, die geeignet ist, nach Aktivierung des Treibmittels eine Schaumpolsterkaschierung zu ergeben; und
(c) Aktivieren des Treibmittels;
wodurch man eine Schaumpolsterkaschierung erhält, die zur Verwendung bei einem Teppich oder einer Teppichfliese geeignet ist, wobei die Schaumpolsterkaschierung weniger als 2 % Vernetzung umfasst, wobei die Schaumpolsterkaschierung eine Dicke von mehr als 0,19 cm (0,075 Zoll) und eine Dichte von 0,16 bis 0,48 g/cm³ (10 bis 30 Pfund/Kubikfuß) aufweist.

12. Verfahren gemäß Anspruch 11,
(i) das weiterhin das Bereitstellen einer vorbeschichteten Rohware umfasst, wobei die Fläche die vorbeschichtete Rohware ist und wobei das Treibmittel nach Auftragen der Polymerzusammensetzung auf die Rohware aktiviert wird, wodurch man eine Teppichstruktur mit einer daran klebenden Schaumpolsterkaschierung erhält, wobei vorzugsweise die Teppichstruktur mit der daran klebenden Schaumpolsterkaschierung eine gemäß ASTM D3936 gemessene Delaminierungsfestigkeit von mehr als 0,45 kg/cm (2,5 Pfund/Zoll) aufweist; oder
(ii) das weiterhin das Bereitstellen einer vorbeschichteten Rohware umfasst, wobei die Schaumpolsterkaschierung nach Aktivierung des Treibmittels mit einem Klebstoff auf die vorbeschichtete Rohware laminiert wird, wobei vorzugsweise die schaumpolsterkaschierte Teppichstruktur eine gemäß ASTM D3936 gemessene Delaminierungsfestigkeit von mehr als 0,45 kg/cm (2,5 Pfund/Zoll) aufweist; oder
(iii) wobei die Polymerzusammensetzung einen Füllstoff umfasst; oder
(iv) wobei die Polymerzusammensetzung ein elastisches Material umfasst, wobei vorzugsweise das elastische Material eines oder mehrere der folgenden umfasst: Ethylen-Propylen-Dienmonomer-Kautschuk (EPDM), Ethylen-Propylen-Monomer-Kautschuk (EPM), Acrylnitril-Butadien-Kautschuk (NBR), Styrol-Butadien-Kautschuk (SBR), carboxylierten NBR, carboxylierten SBR, Styrol-Blockcopolymer, thermoplastisches Elastomer und flexible Polyethylenharze sehr geringer Dichte, wobei das elastische Material vorzugsweise in der Polymerzusammensetzung in einer Menge von 5 bis 40 Gew.-% der schäumbaren Polymerzusammensetzung vorhanden ist; oder
(v) das weiterhin das Einführen eines Textils auf die schäumbare Polymerzusammensetzung vor der Aktivierung des Treibmittels umfasst, wodurch man eine Schaumpolsterkaschierung mit einem an einer Seite derselben befestigten Textil erhält.

## Revendications

1. Endos coussiné en mousse comprenant une composition polymère expansive comprenant : un ou plusieurs polymères d'éthylène ramifiés de manière homogène (HBEP) ou un polymère d'éthylène sensiblement linéaire (SLEP), dans lequel un endos coussiné en mousse est préparé à partir de la composition de polymère expansive, ledit endos coussiné en mousse présentant moins de 2 % de réticulation, ledit endos coussiné en mousse présentant une épaisseur supérieure à 0,19 cm (0,075 pouce) et une masse volumique comprise entre 0,16 et 0,48 g/cm³ (entre 10 et 30 livres/pied³), ledit endos coussiné en mousse étant approprié pour être utilisé dans des moquettes ou des dalles de moquette.

2. Endos coussiné en mousse selon la revendication 1, lequel
(i) comprend le polymère d'éthylène sensiblement linéaire (SLEP) ; ou
(ii) présente une épaisseur allant de 0,245 à 0,572 cm (entre 0,100 et 0,225 pouce).

3. Endos coussiné en mousse selon la revendication 1, dans lequel la composition de polymère expansive comprend en outre un matériau adhésif et dans lequel le matériau adhésif comprend un polymère ou un copolymère fonctionnalisé, de préférence
(i) la composition de polymère expansive comprend plus de 0 et jusqu'à 10 % du polymère ou du copolymère fonctionnalisé, tel que mesuré par rapport au poids total de la composition de polymère expansive ; ou
(ii) le matériau de polymère ou de copolymère fonctionnalisé comprend un anhydride maléique greffé à un polymère d'éthylène.

4. Endos coussiné en mousse selon la revendication 1, dans lequel la composition de polymère expansive comprend en outre une matière de charge.

5. Moquette ou dalle de moquette comprenant un tissé grège pré-enduit ayant une face de dessus et une face de dessous, ledit tissé grège pré-enduit ayant l'endos coussiné en mousse selon la revendication 1 fixé sur la face de dessous de celui-ci à l'aide d'un matériau adhésif.

6. Moquette ou dalle de moquette selon la revendication 5,
(i) dans laquelle l'endos coussiné en mousse est fixé sur la face de dessous du tissé grège pré-enduit à l'aide d'un matériau adhésif qui est appliqué séparément sur l'une ou l'autre ou sur les deux faces de dessous du tissé grège pré-enduit et de l'endos coussiné en mousse; ou
(ii) dans laquelle l'endos coussiné en mousse est fixé sur la face de dessous du tissé grège pré-enduit à l'aide d'un matériau adhésif qui est incorporé à la composition de polymère expansive ; ou
(iii) qui présente une déformation rémanente après compression comprise entre 1 et 20 %, le pourcentage désignant la récupération en pourcentage de l'endos coussiné en mousse après compression d'un échantillon de 7,6 cm x 7,6 cm (3 pouces sur 3 pouces) à 25 % pendant 22 heures à température ambiante ; ou
(iv) qui présente une déformation rémanente après compression comprise entre 8 et 20 %, telle que mesurée selon la norme ASTM 3575, suffixe B ; ou
(v) qui présente une résistance à la compression comprise entre 0,34 et 1,72 bar (entre 5 et 25 psi), telle que mesurée en comprimant sur son épaisseur un échantillon de l'endos de 7,6 cm x 7,6 cm (3 pouces sur 3 pouces) pendant 1 minute, puis en mesurant la force nécessaire à la récupération de l'épaisseur à température ambiante ; ou
(vi) qui présente une résistance à la compression comprise entre 1,24 et 2,21 bar (entre 18 et 32 psi), telle que mesurée selon la norme ASTM 3575, suffixe D ; ou
(vii) dans laquelle l'endos coussiné en mousse présente une surface extérieure, ladite surface extérieure ayant un matériau textile tissé ou non-tissé fixé sur celle-ci ; ou
(viii) dans laquelle l'endos coussiné en mousse présente une surface extérieure, ladite surface extérieure ayant une couche de couverture de polymère d'éthylène fixée sur celle-ci, ladite couche de couverture étant de préférence présente à raison de 170 à 848 g/m² (5 à 25 once/yard²) ; ou
(ix) qui présente une résistance à l'arrachement supérieure à 0,45 kg/cm (2,5 livres/pouce), telle que mesurée selon la norme ASTM D3936 ; ou
(x) qui comporte un canevas incorporé en surface de l'endos coussiné en mousse adjacent au matériau adhésif.

7. Endos coussiné en mousse selon la revendication 1, comprenant en outre un ou plusieurs matériaux résilients.

8. Endos coussiné en mousse selon la revendication 7,
(i) dans lequel le matériau résilient comprend un ou plusieurs éléments parmi : le caoutchouc éthylène-propylène-diène monomère (EPDM), le caoutchouc éthylène-propylène monomère (EPM), le caoutchouc acrylonitrile butadiène (NBR), le caoutchouc styrène-butadiène (SBR), le NBR carboxylé, le SBR carboxylé, le copolymère séquencé de styrène, l'élastomère thermoplastique et les résines de polyéthylène flexibles très basse densité, le matériau résilient étant de préférence présent dans la composition de polymère à raison de 5 à 40 % en poids de la composition de polymère expansive ; ou
(ii) qui comprend un polymère d'éthylène sensiblement linéaire (SLEP) ; ou
(iii) qui présente une épaisseur comprise entre 0,245 et 0,572 cm (entre 0,100 et 0,225 pouce) ; ou
(iv) dans laquelle la composition de polymère expansive comprend en outre un matériau adhésif, ledit matériau adhésif comprenant un polymère ou un copolymère fonctionnalisé, de préférence
- la composition de polymère expansive comprend plus de 0 et jusqu'à 10 % du polymère ou du copolymère fonctionnalisé, tel que mesuré par rapport au poids total de la composition de polymère expansive ; ou
- le matériau de polymère ou de copolymère fonctionnalisé comprend un anhydride maléique greffé à un polymère d'éthylène ; ou
(v) la composition de polymère expansive comprend en outre une matière de charge.

9. Moquette ou dalle de moquette comprenant un tissé grège pré-enduit ayant une face de dessus et une face de dessous, ledit tissé grège pré-enduit ayant l'endos coussiné en mousse selon la revendication 7 fixé sur la face de dessous de celui-ci à l'aide d'un matériau adhésif.

10. Moquette ou dalle de moquette selon la revendication 9,
(i) dans laquelle l'endos coussiné en mousse est fixé sur la face de dessous de la moquette ou de la dalle de moquette à l'aide d'un matériau adhésif qui est appliqué séparément sur l'une ou l'autre ou les deux faces de dessous de la moquette ou de la dalle de moquette et de l'endos coussiné en mousse; ou
(ii) dans laquelle l'endos coussiné en mousse est fixé sur la face de dessous du tissé grège pré-enduit à l'aide d'un matériau adhésif qui est incorporé à la composition de polymère expansive ; ou
(iii) qui présente une déformation rémanente après compression comprise entre 1 et 20 %, le pourcentage désignant la récupération en pourcentage de l'endos après compression d'un échantillon de 7,6 cm x 7,6 cm (3 pouces sur 3 pouces) à 25 % pendant 22 heures à température ambiante ; ou
(iv) qui présente une déformation rémanente après compression comprise entre 8 et 20 %, telle que mesurée selon la norme ASTM 3575, suffixe B ; ou
(v) qui présente une résistance à la compression comprise entre 0,34 et 1,72 bar (entre 5 et 25 psi), telle que mesurée en comprimant sur son épaisseur un échantillon de l'endos de 7,6 cm x 7,6 cm (3 pouces sur 3 pouces) pendant 1 minute, puis en mesurant la force nécessaire à la récupération de l'épaisseur à température ambiante ; ou
(vi) qui présente une résistance à la compression comprise entre 1,24 et 2,21 bar (entre 18 et 32 psi), telle que mesurée selon la norme ASTM 3575, suffixe D ; ou
(vii) dans laquelle l'endos coussiné en mousse présente une surface extérieure, ladite surface extérieure ayant une couche de couverture de polymère d'éthylène fixée sur celle-ci, ladite couche de couverture étant de préférence présente à raison de 170 à 848 g/m² (5 à 25 once/yard²) ; ou
(viii) dans laquelle l'endos coussiné en mousse présente une surface extérieure, ladite surface extérieure ayant un support textile tissé ou non-tissé fixé sur celle-ci ; ou
(ix) qui présente une résistance à l'arrachement supérieure à 0,45 kg/cm (2,5 livres/pouce), telle que mesurée selon la norme ASTM D3936 ; ou
(x) qui comporte un canevas incorporé en surface de l'endos coussiné en mousse adjacent au matériau adhésif.

11. Procédé de fabrication d'un l'endos coussiné en mousse approprié pour être utilisé dans une moquette ou une dalle de moquette, ledit procédé comprenant les étapes suivantes :
(a) mettre à disposition une composition de polymère comprenant :
(i) un ou plusieurs polymères d'éthylène ramifiés de manière homogène (HBEP) ou un polymère d'éthylène sensiblement linéaire (SLEP) ; et
(ii) un agent d'expansion ;
(b) appliquer la composition de polymère sur une surface appropriée pour produire un endos coussiné en mousse après activation de l'agent d'expansion ; et
(c) activer l'agent d'expansion,
produisant ce faisant un endos coussiné en mousse approprié pour être utilisé dans une moquette ou une dalle de moquette, ledit endos coussiné en mousse présentant moins de 2 % de réticulation, ledit endos coussiné en mousse présentant une épaisseur supérieure à 0,19 cm (0,075 pouce) et une densité comprise entre 0,16 et 0,48 g/cm³ (entre 10 et 30 livres/pied³).

12. Procédé selon la revendication 11,
(i) comprenant en outre la mise à disposition d'un tissé grège pré-enduit, la surface étant le tissé grège pré-enduit, et dans lequel l'agent d'expansion est activé après application de la composition de polymère sur le tissé grège pré-enduit, produisant ce faisant une structure de moquette ayant un l'endos coussiné en mousse fixé sur celle-ci, la structure de moquette ayant l'endos coussiné en mousse fixé sur celle-ci ayant de préférence une résistance à l'arrachement supérieure à 0,45 kg/cm (2,5 livres/pouce), telle que mesurée selon la norme ASTM D3936 ; ou
(ii) comprenant en outre la mise à disposition d'un tissé grège pré-enduit, dans lequel l'endos coussiné en mousse est collé au tissé grège pré-enduit à l'aide d'un matériau adhésif après activation de l'agent d'expansion, la structure de moquette ayant l'endos coussiné en mousse ayant de préférence une résistance à l'arrachement supérieure à 0,45 kg/cm (2,5 livres/pouce), telle que mesurée selon la norme ASTM D3936 ; ou
(iii) dans lequel la composition de polymère expansive comprend en outre une matière de charge ; ou
(iv) dans lequel la composition de polymère expansive comprend un matériau résilient, ledit matériau résilient comprenant de préférence un ou plusieurs éléments parmi : le caoutchouc éthylène-propylène-diène monomère (EPDM), le caoutchouc éthylène-propylène monomère (EPM), le caoutchouc acrylonitrile butadiène (NBR), le caoutchouc styrène-butadiène (SBR), le NBR carboxylé, le SBR carboxylé, le copolymère séquencé de styrène, l'élastomère thermoplastique et les résines de polyéthylène flexibles très basse densité, de manière préférée entre toutes, ledit matériau résilient étant présent dans la composition de polymère à raison de 5 à 40 % en poids de la composition de polymère expansive ; ou
(v) comprenant en outre l'insertion d'un canevas dans la composition de polymère expansive avant activation de l'agent d'expansion, produisant ce faisant un endos coussiné en mousse pourvu d'un canevas fixé sur l'une de ses faces.
